(19) Europäisches Patentamt
European Patent Office
Office européen des brevets

(11) EP 1 666 234 B1

(12) EUROPEAN PATENT SPECIFICATION

(45) Date of publication and mention of the grant of the patent:
**11.05.2011 Bulletin 2011/19**

(21) Application number: **04771453.0**

(22) Date of filing: **10.08.2004**

(51) Int Cl.:
***B29C 67/00*** *(2006.01)*

(86) International application number:
**PCT/JP2004/011466**

(87) International publication number:
**WO 2005/021247 (10.03.2005 Gazette 2005/10)**

# (54) PROCESS FOR PRODUCING THREE-DIMENSIONAL SHAPED ARTICLE

VERFAHREN ZUR HERSTELLUNG EINES DREIDIMENSIONAL GEFORMTEN ARTIKELS

PROCEDE DE PRODUCTION D'UN ARTICLE DE FORME TRIDIMENSIONNELLE

(84) Designated Contracting States:
**AT BE BG CH CY CZ DE DK EE ES FI FR GB GR HU IE IT LI LU MC NL PL PT RO SE SI SK TR**

(30) Priority: **28.08.2003 JP 2003304678**
**18.09.2003 JP 2003325710**
**10.03.2004 JP 2004066503**

(43) Date of publication of application:
**07.06.2006 Bulletin 2006/23**

(73) Proprietor: **FUJIFILM Corporation**
**Minato-ku**
**Tokyo (JP)**

(72) Inventor: **SANO, Shojiro,C/o Fuji Photo Film Co., Ltd.**
**Fujinomiya-shi, Shizuoka 4188666 (JP)**

(74) Representative: **HOFFMANN EITLE**
**Patent- und Rechtsanwälte**
**Arabellastraße 4**
**81925 München (DE)**

(56) References cited:
**WO-A-93/01258**
**WO-A-97/29148**
**JP-A- 2001 150 556**
**JP-A- 2002 292 750**
**JP-A- 2002 307 562**
**US-A- 5 342 919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a process for producing a three-dimensional model according to the preamble of claim 1.

Such a process is disclosed in document US2002/105114.

There is a conventionally known technique to form a model, which is a three-dimensional model of a solid modeled object, by bonding with a binder a thin powder layer for each of a plurality of sliced parallel cross-sectional shapes of the modeled object, and sequentially layering these bonded thin cross-sectional shaped layers.

Such a technique is known as rapid prototyping and can be utilized in applications- such as component prototyping and design verification. Recently, a system employing an inkjet method, which is inexpensive, fast, and suitable for the formation of a color model, has been proposed and disclosed in, for example, Patent Publication 1. A specific procedure for this three-dimensional modeling is explained below.

Firstly, a thin layer of a powder is spread above a flat surface by means of a blade mechanism so as to have a uniform thickness, and an inkjet nozzle head is made to scan and discharge a binder onto the surface of the thin powder layer according to a sliced parallel cross-sectional shape of the modeled object. The powder material in the region where the binder has been discharged is subjected to an operation necessary to put it into a bonded state and also to bond it to the cross-sectional shape of a lower layer that has already been formed. These steps of sequentially forming a thin powder layer at the top and discharging the binder are repeated until the whole model is completed. Finally, powder in a region to which no binder has been applied can be removed easily when taking out the model from the equipment and the target model can be separated because the powder particles are separate and not bonded to each other. In accordance with the above-mentioned operations, a desired three-dimensional model can be produced.

Furthermore, a production process employing a similar method, in which binders are colored with yellow (Y), magenta (M), and cyan (C), thus giving a colored three-dimensional model, has been disclosed in, for example, Patent Publication 2.

However, in the present situation the above-mentioned method cannot achieve a satisfactory level of properties (texture, color) for a model when compared with that which is desired. In particular, it is thought that a three-dimensional model for which transparency is required cannot be obtained by the conventional method because of the difference in properties between the powder and the binder. Furthermore, in order to impart smoothness to the surface, it is necessary to carry out overcoating and polishing manually, which requires time and expense.

Moreover, it is generally difficult to reliably draw a desired pattern, etc. on a predetermined position of a three-dimensional model by hand painting.

Since a three-dimensional model immediately after forming is shaped only by virtue of the bonding force of the binder, the three-dimensional model has a low strength and, depending on the way it is handled, might be broken. Conventionally, therefore, after forming the three-dimensional model it is impregnated with a resin, a wax, etc. between the powder particles in order to increase the strength. However, such a step requires time and effort.

(Patent Publication 1)
Japanese registered patent No. 2729110
(Patent Publication 2)
JP-A-2001-150556 (JP-A denotes a Japanese unexamined patent application publication)

An object of the present invention is to provide a process for producing a three-dimensional model, the process having high modeling speed and enabling a three-dimensional model having high gloss and transparency to be obtained.

It is another object of the present invention to provide a three-dimensional modeling technique that enables a target three-dimensional model to be produced faithfully in terms of not only shape but also color. Yet another object of the present invention is to produce a colored three-dimensional model having excellent mechanical strength in a short time and at low cost.

Means for Solving the Problems

The above-mentioned objects of the present invention can be attained by the features of claim 1. Listed below are preferred embodiments.

(2) The process for producing a three-dimensional model according to claim 1, wherein the process comprises sequentially repeating a step of forming above a support a layer of a powder material, the layer having a predetermined thickness, and a step of imagewise bonding the powder material layer by a binder according to sliced cross-sectional data of a modeled object so as to give a cross-sectional shape,
(3) the process for producing a three-dimensional model according to either claim 1 or (2), wherein the powder

material is a synthetic macromolecular compound,

(4) the process for producing a three-dimensional model according to any one of claim 1 to (3), wherein the powder material is selected from the group consisting of an acrylic resin, an olefin resin, a phenolic resin, a styrene resin, a divinylbenzene resin, and a fluorine resin.

(5) The process for producing a three-dimensional model according to any one of claim 1 to (4), wherein the powder material has a porosity of no greater than 0.80,

(7) the process for producing a three-dimensional model according to any one of claim 1 to 5, wherein the binder employs two or more types of binders selected from the group consisting of at least one type of colored binder, a white binder, and a colorless binder,

(8) the process for producing a three-dimensional model according to any one of claim 1 to (7), wherein the colored binder comprises at least two binders selected from the group consisting of a yellow binder, a magenta binder, a cyan binder, and a black binder,

(9) the process for producing a three-dimensional model according to any one of claim 1 to (8), wherein the percentage volume shrinkage of the binder during curing is no greater than 15%,

(10) the process for producing a three-dimensional model according to any one of claim 1 to (9), wherein the viscosity of the binder at 25°C is 1 to 100 mPa·s,

(11) the process for producing a three-dimensional model according to any one of claim 1 to (10), wherein the binder is a UV-curing binder,

(12) the process for producing a three-dimensional model according to any one of claim 1 to (11), wherein the binder comprises at least one type of functional (meth)acrylate,

(14) the process for producing a three-dimensional model according to any one of claim 1 to (13), wherein the ratio of the powder material to the total amount of binder is powder material : binder = 90:10 to 25:75 as a ratio by volume,

(16) the process for producing a three-dimensional model according to any one of claim 1 to (15), wherein all of said two or more types of powder materials have an average particle size of 0.1 μm to 50 μm,

(17) the process for producing a three-dimensional model according to any one of claim 1 to (16), wherein the average particle size of the powder material is 0.8 μm to 50 μm,

In accordance with the use of a synthetic organic powder as a powder material, which is bonded by a binder such as a UV-curing resin, it is possible to impart transparency, excellent texture and mechanical strength; and for surface gloss and vivid colors to be shown. As a result, it becomes possible to produce a high quality three-dimensional model simply and inexpensively, which has conventionally been impossible.

FIG. 1A schematic view showing each step of one embodiment of the process for producing a three-dimensional model of the present invention.

FIG.2A perspective view showing schematically the cross-sectional shape of several layers formed in the production of the three-dimensional model shown in FIG. 1.

Explanation of Reference Numerals

| | |
|---|---|
| 1 | Thin layer |
| 2 | Region to which binder has been applied |
| 3 | Three-dimensional modeling section |
| 4 | Support (modeling stage) |
| 5 | Vertically moving section |
| 6 | Frame |
| 7 | Blade |
| 8 | Inkjet head |
| 9 | Ultraviolet irradiation section |
| 10 | Three-dimensional model |

The present invention relates to a process for producing a three-dimensional model, the process comprising a step of forming above a support a layer comprising a powder material, and a step of imagewise bonding the powder material layer thus obtained by a binder, the powder material employing a synthetic organic powder, and the binder being cured by actinic radiation.

'Imagewise' referred to in the present invention means 'a two-dimensional image shape' in the process for producing a three-dimensional model, and 'a three-dimensional image shape' as a final form in the three-dimensional

model. In the case of the former, it can also mean 'to give a cross-sectional shape', and in the case of the latter, it can also mean 'to give a solid shape that is the same as or similar to the three-dimensional model that is to be produced'.

The sea-island structure referred to here means a structure in which island phases having a closed boundary (boundary between phases) are present in a continuous phase. That is, the present invention employs a structure in which islands of the synthetic organic powder are present in a continuous phase of the binder cured by actinic radiation, which is the sea. In this way, the three-dimensional model of the present invention employs a structure in which, in a continuous phase, a phase of another constituent is present as islands.

The present invention is a process for producing a three-dimensional model that includes a step (layer formation step) of forming above a support a layer of a powder material, the layer having a predetermined thickness, a step (cross-sectional shape formation step) of bonding the powder material layer by a binder so as to give a sliced parallel cross-sectional shape of a modeled object, and sequentially repeating the above steps, the powder material preferably having a porosity of no greater than 0.80.

The powder material used in the present invention is a synthetic organic powder. The synthetic organic powder referred to here means that organic powders obtained from nature (proteins, polysaccharides, natural rubber, etc.) are excluded from among the organic powders.

As the synthetic organic powder, it is preferable to use a synthetic macromolecular compound. The synthetic macromolecular compound referred to here means a compound formed by subjecting a low molecular weight compound obtained from a starting material such as petroleum, coal, or a carbide to a chemical reaction such as polymerization or condensation so as to artificially increase the molecular weight.

The powder material used in the present invention preferably has a porosity of no greater than 0.80, more preferably no greater than 0.65, and most preferably 0.30 to 0.60.

The average particle size is preferably 0.1 to 50 μm. The particle size distribution can be wide, but is preferably narrow. It is preferable for the particle size distribution to be nearly monodisperse, and the coefficient of variation of the particle size distribution is preferably 20% or less, and particularly preferably 15% or less.

The powder material used in the present invention preferably comprises two or more types of powder having different average particle sizes. The mixing ratio of large particle size particles (a) and small particle size particles (b) is preferably (b) / (a) = 5/95 to 50/50. Furthermore, the average particle size of (a) / average particle size of (b) is preferably 2 to 500.

A detailed explanation is given later.

As the support above which the powder material is laid, a support having any surface profile can be used, but a support having a smooth surface is preferable, and a support having a flat surface may be used preferably. In the production process of the present invention, it is preferable to use a horizontal support having on its perimeter a frame that can be extended to a height greater than that of the three-dimensional model that is to be produced.

With regard to the predetermined thickness for the powder material layer, it is preferably a layer having a slice pitch thickness of 10 to 500 μm, more preferably 50 to 150 μm, and yet ,more preferably 25 to 150 μm. Each time a layer formation step and a colored cross-sectional shape formation step are repeated, the overall thickness of the stack of powder material layers increases by the above-mentioned slice pitch.

The colored cross-sectional shape referred to here means one that has a shape of one of a plurality of sliced parallel cross sections of a modeled object, and that is accompanied by coloring corresponding to the shape. In particular, when the cross-sectional shape is that of an opaque model, the model can be hollow, and in this case it is sufficient to reproduce the shape in the vicinity of the outline thereof. With regard to coloration, color may be reproduced on the surface of the model, and color reproduction of the outline of the shape is important.

A summary of the process for producing a three-dimensional model of the present invention is explained with reference to drawings.

FIG. 1 is a schematic view showing the main steps of one embodiment of the process for producing a three-dimensional model of the present invention.

In the production process of the present invention, a thin layer 1 of a powder material is formed on a support (modeling stage) 4 provided in a three-dimensional modeling section 3. The support 4 is supported by a vertically moving section 5 and its perimeter is surrounded by a frame 6. The thin layer 1 is formed by moving surplus powder material, which is supplied from a powder supply section to the support 4, in a direction X (the left-to-right direction in the plane of the paper) by means of a blade 7 that extends lengthwise in a direction Y (a direction perpendicular to the plane of the paper). A binder is supplied to the top of the thus-formed thin layer 1 of the powder material, via an inkjet head 8 of a binder application section, according to cross-sectional shape data so as to form a region 2 to which the binder has been applied. This region 2 to which the binder has been applied is cured by exposure to ultraviolet rays from an ultraviolet irradiation section 9, thus bonding the powder material throughout the thickness of the thin layer in the region 2 to which the binder has been applied and also bonding it to the cross-sectional shape that is directly below.

Subsequently, the vertically moving section 5 is moved downward by 1 slice pitch, and a new powder material layer is formed.

Binder is supplied to the top of the newly formed thin layer via the inkjet head of the binder application section according to the next adjacent cross-sectional shape data so as to form a new region to which binder has been applied. This region is cured by exposure to ultraviolet rays as necessary so as to bond the powder material throughout the thickness of the thin layer in the region to which the binder has been applied, and also to bond it to the cross-sectional shape of the thin layer that is directly below.

After sequentially repeating formation of the powder material thin layer 1, supply of the binder, and curing a required number of times, a three-dimensional model 10 can be obtained by separating the powder material in a region where no binder has been applied.

FIG. 2 is a perspective view showing schematically the cross-sectional shape formed in each of the adjacent layers in the production of the above-mentioned three-dimensional model.

A preferred embodiment of the process for producing a three-dimensional model of the present invention is explained below. The five steps below include a step of forming three-dimensional shape color data and a step of forming colored cross-sectional shape data for each cross section, prior to the (powder) layer formation step and the colored cross-sectional shape formation step.

In a first step, model data representing a three-dimensional modeled object having on its surface a color pattern, etc. are formed in a computer. As model data used as a basis for modeling, color three-dimensional model data formed by general 3D-CAD modeling software can be used. It is also possible to utilize data and texture of a three-dimensional colored shape measured using a three-dimensional shape input device.

In a second step, cross-sectional data for each horizontally sliced cross section of the modeled object are formed in a computer from the above-mentioned model data. A cross-sectional body sliced at a pitch (layer thickness t) corresponding to the thickness of one layer of the layered powder is cut out of the model data, and shape data and coloration data showing a region where the cross section is present are formed as the cross-sectional data. Specifically, data (STL format, etc.) obtained using three-dimensional CAD can be converted into data of a cross section sliced at a thickness of 10 to 500 $\mu$m. In the present invention, 'shape data' and 'coloration data' are together also called 'colored (cross sectional) shape data'.

Subsequently, information regarding the layer thickness (slice pitch when forming the cross sectional data) of the powder and the number of layers (the number of sets of colored shape data) when modeling a modeled object is input from the computer into a drive control section of a pattern formation device.

In a third step, supply of a powder material, which is the material for producing the three-dimensional model on the modeling stage, is carried out. The powder material is spread in a uniformly thick layer shape using a powder material counter-rotating mechanism (hereinafter, called a 'counter roller'), and supply of the powder material is stopped when a predetermined amount of powder has been supplied.

'Sequentially repeating the layer formation step and the cross-sectional shape formation step' referred to in the present invention means not only (1) carrying out a step of forming a cross-sectional shape on the whole surface of a new layer after completing a new layer formation step, but also (2) forming a cross-sectional shape in a region of a newly formed layer before formation of the newly formed layer is completed, while still carrying out the new layer formation step. An example of the latter case has been disclosed in JP-A-2002-307562.

A fourth step is a step of forming a colored cross-sectional shape under the control of the drive control section according to the colored shape data for the cross section. This step preferably employs a non-contact method. As a representative example, an inkjet method is explained.

The shape data and the coloration data created in the second step are converted into finely divided grids of bitmap information for each color of C, M, and Y, and an inkjet head is moved within the XY plane. During the movement, an ultraviolet (UV)-curing binder is discharged appropriately from each inkjet discharge nozzle based on the coloration data. With regard to the binder, it is preferable to use two or more types of binders selected from the group consisting of at least one type of colored binder, a white binder, and a colorless transparent binder. In the present invention, the colored binder does not include a white-colored binder.

With regard to the colored binders, a combination of the three colors of yellow (Y), magenta (M), and cyan (C), which are subtractive primaries, is preferable. If necessary, a black dye-colored binder (black binder) can be further used as a colored binder in combination. In the present invention, a yellow-colored binder is called a 'yellow binder', a magenta-colored binder is called a 'magenta binder', and a cyan-colored binder is called a 'cyan binder'. An M dye and a C dye may each comprise two, that is, dark- and pale-colored, types of binders. The colorless binder can be used in order to adjust the CMY color densities. Furthermore, a desired effect can be attained by the combined use of a binder (white binder) containing a white (W) pigment such as titanium white.

The total amount of colored binder, colorless binder, and white binder discharged is preferably constant per unit area.

As another example of the step of forming a colored cross-sectional shape, it is possible to employ a two-stage step in which, after a colorless ultraviolet-curing binder alone is discharged onto a powder material according to the shape data and cured by ultraviolet irradiation, a normal CMY inkjet containing no binder is discharged on the bonded

powder material layer according to the coloration data for the layer.

At the same time as or after the ultraviolet-curing binder is discharged, the surface of the discharged binder is exposed to ultraviolet rays using an ultraviolet irradiation device, thus forming a powder material bonded body.

When the atmosphere for the UV irradiation is an atmosphere of an inert gas such as nitrogen or argon, the effect of oxygen in delaying radical polymerization of a polymerizable compound can be suppressed.

The inkjet system employed here means mainly an on-demand inkjet system, which includes a piezo on-demand inkjet system, a thermal on-demand inkjet system, and an electrostatic on-demand inkjet system, and the piezo on-demand inkjet system and the electrostatic on-demand inkjet system are preferable in terms of stability of the UV-curing binder.

Further repeating the third step and the fourth step enables a target three-dimensional model to be obtained.

In a powder material region to which no binder is applied, the powder is maintained in a separated state.

In a fifth step, the powder material in a region to which no binder has been applied is separated, and a bonded powder body (three-dimensional model) imagewise bonded by the binder is taken out. The powder material that has not been bonded is recovered and can be reused.

By sequentially repeating the third and fourth steps, a three-dimensional model formed by sequentially layering bonded colored powder material bodies corresponding to cross sections obtained by sectioning the modeled object in a plurality of planes can thus be produced.

By bonding into a cross-sectional shape a layer of a powder material having a refractive index $n_1$ by means of a binder that gives a refractive index $n_2$ (here, $-0.1 \leq (n_1-n_2) \leq 0.1$), a transparent or substantially transparent three-dimensional model can be produced.

The three-dimensional model thus obtained may be subjected to a posttreatment step such as cleaning, thermal treatment, resin or wax impregnation, or polishing. Cleaning is carried out by blowing the above-mentioned three-dimensional model and brushing so as to remove any powder remaining in gaps, thus enabling surplus powder to be removed. The thermal treatment increases the strength and the durability of the above-mentioned three-dimensional model. Wax impregnation reduces the porosity, imparts water resistance to the above-mentioned three-dimensional model, and makes finishing by polishing easy. Finishing by polishing improves the surface smoothness.

Each component used in the present invention is explained below. Specific details should not be construed as being limited to those in the explanation below.

<u>Synthetic organic powder</u>

Examples of the synthetic organic powder include synthetic resin particles, and specific examples thereof include acrylic resins, olefin resins, phenolic resins, urethane resins, styrene resins, divinylbenzene resins, polyester, polyamide, polyimide, acrylonitrile-butadiene-styrene copolymers, polyacrylonitrile, epoxy resins, fluorine resins, melamine formaldehyde, polycarbonate, sulfone polymers, and vinyl polymers. Among these, acrylic resins, olefin resins, phenolic resins, styrene resins, divinylbenzene resins, and fluorine resins can be used preferably.

The acrylic resin referred to here means a resin obtained by homopolymerization or copolymerization of (meth)acrylic acid, a (meth)acrylate ester, (meth)acrylamide, or (meth)acrylonitrile. The above-mentioned notation '(meth)acrylic acid' is an abbreviation denoting that it can take either the methacrylic acid structure or the acrylic acid structure.

Examples of the (meth)acrylate ester include methyl (meth)acrylate, ethyl (meth)acrylate, butyl (meth)acrylate, lauryl (meth)acrylate, stearyl (meth)acrylate, 2-hydroxyethyl (meth)acrylate, 2-hydroxypropyl (meth)acrylate, 2-dimethylaminoethyl (meth)acrylate, and glycidyl (meth)acrylate.

As the acrylic resin, poly(methyl methacrylate) can be used preferably.

Examples of other acrylic resins include resins described in 'Kobunshi Daijiten' (Polymer Dictionary), Edited and translated by T. Mita, Maruzen Co., Ltd. (1994) pp. 6-12.

The olefin resin denotes a polymer of an olefin, and examples thereof include polyethylene, polypropylene, polyisobutylene, poly(1-butene), poly(1-pentene), poly(3-methyl-1-butene), poly(1-hexene), poly(3-methyl-1-pentene), poly(4-methyl-1-pentene), poly(1-heptene), poly(4-methyl-1-hexene), and poly(5-methyl-1-hexene). Polyethylene and polypropylene can be used preferably.

Examples of other olefin resins include resins described in 'Kobunshi Daijiten' (Polymer Dictionary), Edited and translated by T. Mita, Maruzen Co., Ltd. (1994) pp. 102-109.

The phenolic resin denotes a resin obtained by addition-condensation of a phenol and an aldehyde. When an acid catalyst is used in an addition-condensation reaction, a novolac type resin is obtained, and when a base catalyst is used, a resol type resin is obtained. Examples of the phenol include phenol, *p*-cresol, *m*-cresol, and resorcinol. Examples of the aldehyde include formaldehyde, salicylaldehyde, and *s*-trioxane.

Examples of other phenols and aldehydes include compounds described in 'Jikken Kagaku Koza' (Experimental Chemistry Series) 28 Polymer Synthesis 4th Edition (1992) pp. 427-430.

The styrene resin denotes a homopolymer or a copolymer of a styrene monomer. Examples of the styrene

monomer include styrene, *o*-methylstyrene, *m*-methylstyrene, *p*-methylstyrene, divinylbenzene, α-methylstyrene, o-chlorostyrene, *p*-chlorostyrene, and chloromethylstyrene. Polystyrene can be used preferably.

Examples of the copolymer of a styrene monomer include copolymers described in 'Kobunshi Daijiten' (Polymer Dictionary), Edited and translated by T. Mita, Maruzen Co., Ltd. (1994) pp. 506-507.

The divinylbenzene resin denotes a homopolymer or a copolymer of a divinylbenzene monomer. Examples of the divinylbenzene monomer include divinylbenzene and chlorodivinylbenzene. Examples of a monomer that is copolymerized with the divinylbenzene monomer include the above-mentioned styrene monomers.

As the divinylbenzene resin, polydivinylbenzene can be used preferably.

The fluorine resin is a fluorine-containing polymer. Examples of the fluorine resin include polyvinyl fluoride, polyvinylidene fluoride, polytetrafluoroethylene, a tetrafluoroethylene-hexafluoropropylene copolymer, and a tetrafluoroethylene-perfluorovinyl ether copolymer. In particular, polytetrafluoroethylene can be used preferably.

The urethane resin denotes a polymer obtained by addition-polymerization of a polyfunctional isocyanate and a polyol. Examples of the polyfunctional isocyanate include toluene diisocyanate, diphenylmethane diisocyanate, naphthalene-1,5-diisocyanate, tolidine diisocyanate, hexamethylene diisocyanate, and isophorone diisocyanate. Examples of the polyol include a polyether polyol, a polyester polyol, and an aliphatic polyol.

Examples of other polyfunctional isocyanates and polyols include compounds described in, for example, the 'Poriuretan Handobukku' (Polyurethane Handbook), Ed. by K. Iwata, The Nikkan Kogyo Shimbun Ltd. (1987) pp. 77-81 and pp. 99-117.

The above-mentioned resins can be used singly or in a combination of two or more types.

The synthetic organic powder used in the present invention preferably has an average particle size of 100 μm or less, more preferably 0.1 to 50 μm, and most preferably 3 to 30 μm. When the average particle size is in the above-mentioned range, the surface gloss of the three-dimensional model obtained increases, which is preferable. The particle size distribution can be wide, but is preferably narrow. It is preferable for the particle size distribution to be nearly monodisperse, and the coefficient of variation of the particle size distribution is preferably 20% or less, and more preferably 15% or less.

The average particle size referred to here means the volume-average particle size, and can be measured by, for example, a COULTER MULTISIZER manufactured by Beckman Coulter, Inc.

The shape of the synthetic organic powder can be any of amorphous, spherical, tabular, acicular, porous, etc. forms.

The porosity of the powder material used in the present invention is preferably no greater than 0.8, more preferably no greater than 0.65, and most preferably 0.30 to 0.60. By setting the porosity of the powder material in the above-mentioned range, it is possible to increase the powder material / binder ratio and increase the modeling speed for a three-dimensional model.

The porosity referred to in the present invention means the proportion of cavities in the bulk volume of the powder material, and is a value expressed by the formula below.

(Eq. 1)

$$\text{porosity} = \frac{\text{bulk volume of powder material} - \text{volume of powder material portion}}{\text{bulk volume of powder material}}$$

The bulk volume of the powder material is measured by a method in accordance with JIS K6223 (Calcium Carbonate for Rubber) '6.4 Apparent Specific Gravity'.

Furthermore, the powder material used in the present invention preferably comprises two or more types of powder having different average particle sizes.

The mixing ratio (b) / (a) of large particle size particles (a) and small particle size particles (b) is preferably 5/95 to 50/50 as a ratio by volume, more preferably 10/90 to 40/60, and yet more preferably 20/80 to 30/70.

In the present invention, the ratio by volume of the large particle size particles (a) and the small particle size particles (b) means the ratio by actual volume. The actual volume referred to here means a value obtained by dividing the weight of the powder material used by the true density.

All of the average particle sizes of the two or more types of powder materials are preferably 0.1 to 50 μm.

The average particle size of the large particle size particles (a) / the average particle size of the small particle size particles (b) is preferably 2 to 500, more preferably 2.5 to 200, and yet more preferably 3 to 50.

The average particle size of the large particle size particles (a) is preferably in the range of 5 to 50 μm, and more preferably 10 to 50 μm. The average particle size of the small particle size particles (b) is preferably in the range of 0.1 to 10 μm, and more preferably 0.1 to 3 μm.

When the powder material comprises three or more types of powder having different average particle sizes,

any two types of the powder materials may satisfy the above-mentioned relationships.

The porosity of the powder material comprising two or more types of powder having different average particle sizes is preferably no greater than 0.8, more preferably no greater than 0.65, and yet more preferably 0.30 to 0.60. By setting the porosity of the powder material in the above-mentioned range, it is possible to increase the powder material / binder ratio and to increase the modeling speed for a three-dimensional model.

The large particle size particles (a) and the small particle size particles (b) may be different powder materials, but are preferably the same powder material.

As the synthetic organic powder material, powder particles obtained by grinding a bulk-polymerized polymerizable compound used for a binder can be used. The polymerizable compound used for the binder can be subjected to suspension polymerization or pearl polymerization to give a powder material having a desired particle size. In this case, the refractive index of the powder material and the refractive index of the binder can be made close to each other.

The refractive index $n_1$ of the synthetic organic powder is preferably in the range of 1.4 to 1.7.

The refractive index of the binder for bonding the synthetic organic powder together is defined as $n_2$. When an ethylenically unsaturated monomer is used as the binder, the refractive index of the bonding agent formed by polymerization of this monomer is defined as $n_2$. The smaller the absolute value of ($n_1$-$n_2$), the higher the transparency of the model obtained. When the absolute value of the difference between the refractive indexes is no greater than 0.1, the transparency is high, and when it is no greater than 0.06, a nearly transparent model can be obtained. 'Substantially transparent' or 'nearly transparent' referred to in the present invention means that the transmittance per cm of optical path is 50% or higher

Binder

The binder in the present invention is cured by the application of actinic radiation. The binder has the property of undergoing polymerization or crosslinking upon exposure to actinic radiation such as ultraviolet rays or an electron beam, increasing its molecular weight, and thus being cured. Since the binder does not undergo a reaction unless external actinic radiation is applied, the viscosity is stable unless it is exposed to radiation.

The actinic radiation used in the present invention includes various types of radiation such as an electron beam ($\beta$-rays), ultraviolet rays, X-rays, $\gamma$-rays, and $\alpha$-rays.

As the binder, a binder containing a UV-curing compound (hereinafter, also called a 'UV curing binder') can preferably be used. The UV-curing binder comprises a photopolymerization initiator and at least one type of polymerizable compound as essential components; substantially all of the constituent materials are cured by UV light, and have the function of bonding the powder material. With regard to the proportions of the constituent materials, the photopolymerization initiator is preferably 0.05 wt % to 10 wt % relative to the total amount of the polymerizable compound and the photopolymerization initiator, and more preferably 0.1 wt % to 5 wt %, and the polymerizable compound is preferably 90 wt % to 99.5 wt %, and more preferably 95 wt % to 99.9 wt %.

The ratio of the powder material to the total amount of binder is preferably powder material : binder = 90:10 to 25:75 as a ratio by volume, and more preferably 80:20 to 35:65. In the present invention, the volume of the binder means the volume of the binder after curing.

The liquid viscosity at 25°C of the binder is preferably 5 to 100 mPa·s, and more preferably 10 to 50 mPa·s. It is preferable to use a polyfunctional monomer having high viscosity and a monofunctional monomer having low viscosity as an appropriate mixture so that the viscosity is in the above-mentioned range.

Polymerizable compound

With regard to the polymerizable compound that can be used in the UV-curing binder, those for which addition-polymerization or ring-opening polymerization is started by a radical species, a cationic species, etc. formed from a photopolymerization initiator by irradiation with UV light and a polymer is formed are preferably used. With regard to the mode of polymerization of the addition-polymerization, there are radical, cationic, anionic, metathesis, and coordination polymerization. With regard to the mode of polymerization of the ring-opening polymerization, there are cationic, anionic, radical, metathesis, and coordination polymerization.

As an addition-polymerizable compound, a compound having at least one ethylenically unsaturated double bond can be cited. As the addition-polymerizable compound, a compound having at least one, and preferably two or more terminal ethylenically unsaturated bonds can be used preferably. Such terminally ethylenically unsaturated compounds are widely known in the present industrial field. In the present invention, they can be used without particular restriction as long as the binder composition can be discharged stably from an inkjet nozzle.

The ethylenically unsaturated polymerizable compound is, in terms of its chemical configuration, a monofunctional polymerizable compound, a polyfunctional polymerizable compound (i.e. difunctional, trifunctional, or 4- to 6-functional polymerizable compound, etc.), or a mixture thereof. Examples of the monofunctional polymerizable compound

include unsaturated carboxylic acids (e.g. acrylic acid, methacrylic acid, itaconic acid, crotonic acid, isocrotonic acid, and maleic acid), esters thereof, and amides thereof. Examples of the polyfunctional polymerizable compound include esters of an unsaturated carboxylic acid and an aliphatic polyhydric alcohol compound and amides of an unsaturated carboxylic acid and an aliphatic polyhydric amine compound.

It is also possible to use an adduct between an unsaturated carboxylic acid ester or amide having a nucleophilic substituent such as a hydroxyl group, an amino group, or a mercapto group and a monofunctional or polyfunctional isocyanate or epoxide; a dehydration-condensation product with a monofunctional or polyfunctional carboxylic acid; etc. It is also possible to use an adduct between an unsaturated carboxylic acid ester or amide having an electrophilic substituent such as an isocyanate group or an epoxy group and a monofunctional or polyfunctional alcohol, amine or thiol; or a substitution product between an unsaturated carboxylic acid ester or amide having a leaving group such as a halogen or a tosyloxy group and a monofunctional or polyfunctional alcohol, amine or thiol.

Furthermore, as another example, it is also possible to use a group of compounds in which the above-mentioned unsaturated carboxylic acid is replaced by an unsaturated phosphonic acid, styrene, etc.

Specific examples of radically polymerizable compounds that are esters of an unsaturated carboxylic acid and an aliphatic alcohol compound are represented by (meth)acrylic acid esters, and specific examples thereof include isobornyl acrylate, ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, trimethylolpropane tri(meth)acrylate, trimethylolpropane tri((meth)acryloyloxypropyl) ether, trimethylolethane tri(meth)acrylate, trimethylolpropane ethoxytri(meth)acrylate, 1,6-hexanediol di(meth)acrylate, 1,4-cyclohexanediol di(meth)acrylate, tetraethylene glycol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol hexa(meth)acrylate, sorbitol tri(meth)acrylate, sorbitol tetra(meth)acrylate, sorbitol penta(meth)acrylate, sorbitol hexa(meth)acrylate, tri((meth)acryloyloxyethyl) isocyanurate, polyester (meth)acrylate oligomer, bis[*p*-(3-(meth)acryloxy-2-hydroxypropoxy)phenyl]dimethylmethane, and bis-[p-((meth)acryloxyethoxy)phenyl]dimethyl methane.

The above-mentioned notation '(meth)acrylate ester' is an abbreviation denoting that it can take either a methacrylate ester structure or an acrylate ester structure.

Various types of radically polymerizable compounds that are esters of an unsaturated carboxylic acid and an aliphatic alcohol compound are commercially available, and examples thereof include PEG300 diacrylate, PEG600 diacrylate (EB11; manufactured by Daicel UCB Co., Ltd.) and KAYARAD DPCA-60 (caprolactone-modified dipentaerythritol hexaacrylate; manufactured by Nippon Kayaku Co., Ltd.).

In the present invention, the binder preferably contains at least one type of functional (meth)acrylate. Furthermore, the binder preferably contains at least (a) a tri- or higher-functional (meth)acrylate, and (b) a monofunctional and/or difunctional (meth)acrylate.

In addition to the (meth)acrylate ester, an itaconate ester, a crotonate ester, an isocrotonate ester, a maleate ester, etc. can also be used as the polymerizable compound.

Examples of the itaconate ester include ethylene glycol diitaconate, propylene glycol diitaconate, 1,3-butanediol diitaconate, 1,4-butanediol diitaconate, tetramethylene glycol diitaconate, pentaerythritol diitaconate, and sorbitol tetraitaconate.

Examples of the crotonate ester include ethylene glycol dicrotonate, tetramethylene glycol dicrotonate, pentaerythritol dicrotonate, and sorbitol tetracrotonate.

Examples of the isocrotonate ester include ethylene glycol diisocrotonate, pentaerythritol diisocrotonate, and sorbitol tetraisocrotonate.

Examples of the maleate ester include ethylene glycol dimaleate, triethylene glycol dimaleate, pentaerythritol dimaleate, and sorbitol tetramaleate.

Examples of other esters include aliphatic alcohol esters disclosed in, for example, JP-B-46-27926, JP-B-51-47334 (JP-B denotes a Japanese examined patent application publication), and JP-A-57-196231, those having an aromatic skeleton disclosed in JP-A-59-5240, JP-A-59-5241, and JP-A-2-226149, and those containing an amino group disclosed in JP-A-1-165613.

Specific examples of amide monomers of an unsaturated carboxylic acid and an aliphatic polyhydric amine compound include methylenebisacrylamide, methylenebismethacrylamide, 1,6-hexamethylenebisacrylamide, 1,6-hexamethylenebismethacrylamide, diethylenetriaminetrisacrylamide, xylylenebisacrylamide, and xylylenebismethacrylamide.

Other preferred examples of amide monomers include those having a cyclohexylene structure disclosed in JP-B-54-21726.

Furthermore, an addition-polymerizable urethane compound produced by an addition reaction of an isocyanate and a hydroxyl group is also desirable, and specific examples thereof include a vinylurethane compound having two or more polymerizable vinyl groups per molecule obtained by adding a hydroxyl group-containing vinyl monomer represented by Formula (I) below to a polyisocyanate compound having two or more isocyanate groups per molecule, such

as that described in JP-B-48-41708.

Formula (I) $CH_2=C(R^1)COOCH_2CH(R^2)OH$

(Here, $R^1$ and $R^2$ denote H or $CH_3$.)

In the present invention, a cationic ring-opening polymerizable compound having in the molecule one or more cyclic ether groups such as an epoxy group and/or an oxetane group can be used, together with a UV cationic polymerization initiator, as the UV-curing binder.

An overall explanation of cationically polymerizable compounds that can be used preferably in the present invention is given below. As the cationically polymerizable compounds, curable compounds containing a ring-opening polymerizable group can be cited; thereamong, heterocyclic group-containing curable compounds are preferable. Examples of such curable compounds include cyclic iminoethers and vinyl ethers such as epoxy derivatives, oxetane derivatives, tetrahydrofuran derivatives, cyclic lactone derivatives, cyclic carbonate derivatives, and oxazoline derivatives; in particular, epoxy derivatives, oxetane derivatives, and vinyl ethers are preferable.

Preferred examples of the epoxy derivatives can be broadly divided into monofunctional glycidyl ethers, polyfunctional glycidyl ethers, monofunctional alicyclic epoxides, and polyfunctional alicyclic epoxides.

Examples of specific monofunctional and polyfunctional glycidyl ether compounds include diglycidyl ethers (e.g. ethylene glycol diglycidyl ether, bisphenol A diglycidyl ether), tri- or higher-functional glycidyl ethers (trimethylolethane triglycidyl ether, trimethylolpropane triglycidyl ether, glycerol triglycidyl ether, triglycidyl trishydroxyethyl isocyanurate, etc.), tetra- or higher-functional glycidyl ethers (sorbitol tetraglycidyl ether, pentaerythritol tetraglycidyl ether, a polyglycidyl ether of a cresol novolac resin, a polyglycidyl ether of a phenol novolac resin, etc.), alicyclic epoxides (Celloxide 2021P, Celloxide 2081, Epolead GT-301, and Epolead GT-401 (all manufactured by Daicel Chemical Industries, Ltd.), EHPE (manufactured by Daicel Chemical Industries, Ltd.), a polycyclohexyl epoxy methyl ether of a phenol novolac resin, etc.), and oxetanes (OX-SQ, and PNOX-1009 (both manufactured by Toagosei Co., Ltd.), etc.), but the present invention should not be construed as being limited thereto.

In the present invention, an alicyclic epoxy derivative can be preferably used. An 'alicyclic epoxy group' referred to here means a partial structure that is formed by epoxidizing a double bond of a cycloalkene ring such as a cyclopentene group or a cyclohexene group using an appropriate oxidizing agent such as hydrogen peroxide or a peracid.

With regard to the alicyclic epoxy compound, polyfunctional alicyclic epoxides having two or more cyclohexene oxide groups or cyclopentene oxide groups per molecule are preferable. Specific examples of monofunctional or polyfunctional alicyclic epoxy compounds include 4-vinylcyclohexene dioxide, (3,4-epoxycyclohexyl)methyl-3,4-epoxycyclohexyl carboxylate, di(3,4-epoxycyclohexyl) adipate, di(3,4-epoxycyclohexylmethyl) adipate, bis(2,3-epoxycyclopentyl) ether, di(2,3-epoxy-6-methylcyclohexylmethyl) adipate, dicyclopentadiene dioxide, and 3,4-epoxycyclohexenylmethyl 3',4'-epoxycyclohexenecarboxylate.

The alicyclic epoxy compound can be used singly or in a combination of two or more types.

Various types of alicyclic epoxy compounds are commercially available from Union Carbide Japan Ltd. (Dow Chemical Japan, Ltd.), Daicel Chemical Industries, Ltd., etc.

It is also possible to use a normal glycidyl compound having an epoxy group and having no alicyclic structure in the molecule, singly or in combination with the above-mentioned alicyclic epoxy compound.

Examples of such a normal glycidyl compound include a glycidyl ether compound and a glycidyl ester compound, and it is preferable to use a glycidyl ether compound in combination.

Specific examples of the glycidyl ether compound include aromatic glycidyl ether compounds such as 1,3-bis (2,3-epoxypropyloxy)benzene, a bisphenol A epoxy resin, a bisphenol F epoxy resin, a phenol novolac epoxy resin, a cresol novolac epoxy resin, and a trisphenolmethane epoxy resin, and aliphatic glycidyl ether compounds such as 1,4-butanediol glycidyl ether, glycerol triglycidyl ether, propylene glycol diglycidyl ether, and trimethylolpropane triglycidyl ether. Examples of the glycidyl ester include the glycidyl ester of linolenic acid dimer.

The glycidyl ethers are commercially available from Yuka Shell Epoxy Co., Ltd. (Japan Epoxy Resin Co., Ltd.), etc.

In the present invention, it is possible to use a compound having an oxetanyl group, which is a 4-membered cyclic ether (hereinafter, also simply called an 'oxetane compound'). The oxetanyl group-containing compound is a compound having at least one oxetanyl group per molecule. These oxetanyl group-containing compounds can be broadly divided into monofunctional oxetane compounds having one oxetanyl group per molecule and polyfunctional oxetane compounds having two or more oxetanyl groups per molecule.

As the monofunctional oxetane compound, compounds represented by Formula (1) below are preferable.

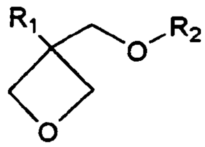

(1)

In Formula (1), $R_1$ denotes a methyl group or an ethyl group. $R_2$ denotes a hydrocarbon group having 6 to 12 carbons.

The hydrocarbon group denoted by $R_2$ can be a phenyl group or a benzyl group, is preferably an alkyl group having 6 to 8 carbons, and is particularly preferably a branched alkyl group such as 2-ethylhexyl. Examples of oxetane compounds in which $R_2$ is a phenyl group are described in JP-A-11-140279. Examples of oxetane compounds in which $R_2$ is a benzyl group, which can have a substituent, are described in JP-A-6-16804.

In the present invention, a polyfunctional oxetane compound can be used, and preferred compounds are those represented by Formula (2) below.

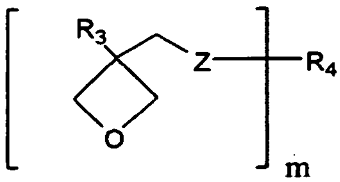

(2)

In Formula (2), m denotes a natural number of 2, 3, or 4, and Z denotes an oxygen atom, a sulfur atom, or a selenium atom. $R_3$ is a hydrogen atom, a fluorine atom, a straight-chain or branched alkyl group having 1 to 6 carbons, a fluoroalkyl or allyl group having 1 to 6 carbons, a phenyl group, or a furyl group. $R_4$ is an m-valent linking group, is preferably a group having 1 to 20 carbons, and can contain one or more oxygen or sulfur atoms.

Z is preferably an oxygen atom, $R_3$ is preferably an ethyl group, m is preferably 2, $R_4$ is preferably a linear or branched alkylene group having 1 to 16 carbons or a linear or branched poly(alkyleneoxy) group, and a compound having any two or more of the preferred $R_3$, $R_4$, Z, and m is more preferable.

As the UV-curing binder of the present invention, it is preferable to use a radically polymerizable ethylenically unsaturated compound and a cationically polymerizable cyclic ether (epoxy derivative and/or oxetane derivative) in combination. Since it has an interpenetrating polymer net (IPN) structure, there is the advantage that a bonded body having balanced physical properties can be obtained. In this case, as a photopolymerization initiator, a radical photopolymerization initiator and a cationic photopolymerization initiator (an onium salt, etc.) are preferably used in combination.

It is preferable that the volatile component content of the cured UV-curing binder is no greater than 5 wt %. Because of this, it is preferable to employ as the binder a solvent-free formulation containing no organic solvent.

In order to reduce the volatile component content after curing, residual monomer may be post-polymerized, after a three-dimensional model is produced, by irradiation with UV light or by heating.

In the present invention, the percentage volume shrinkage of the binder during curing is preferably no greater than 15%.

The 'percentage volume shrinkage during curing' referred to here is a value given from the equation below

$$[(D2 - D1) / D2] \times 100$$

where the liquid specific gravity of a binder comprising a polymerizable compound is D1, and the solid specific gravity after curing is D2.

Furthermore, in the present invention, it is also preferable that the percentage volume shrinkage of the polymerizable compound used in the binder is 15%.

It is known that an addition polymerization reaction of an ethylenically unsaturated double bond is accompanied by shrinkage and, in particular, the percentage volume shrinkage accompanying curing of a monofunctional acrylate or methacrylate can be large.

In contrast, since the percentage volume shrinkage accompanying curing in ring-opening polymerization of a cyclic ether is relatively small, it can be used preferably in the present invention. The volume of some compounds having a plurality of cyclic ether structures per molecule expands accompanying polymerization, and these compounds can

also be used in the present invention.

Polymerizable viscosity-adjusting compound

As a polymerizable viscosity-adjusting compound, a compound having low viscosity and being capable of copolymerizing with a polymerizable compound is used. Examples thereof include an acrylate, a methacrylate, and an acrylamide. Specific examples thereof include tolyloxyethyl (meth)acrylate, phenyloxyethyl (meth)acrylate, cyclohexyl (meth)acrylate, ethyl (meth)acrylate, methyl (meth)acrylate, ethylene glycol di(meth)acrylate, divinylbenzene, methylenebisacrylamide, and 1,6-di(meth)acryloyloxyhexane. Tolyloxyethyl (meth)acrylate, ethylene glycol di(meth)acrylate, 1,6-di(meth)acryloyloxyhexane, etc. are preferable.

With regard to ring-opening polymerizable cyclic ethers, although di- or higher-functional cyclic ethers are generally highly reactive, their viscosities are also high. A monofunctional cyclic ether can be used in combination in order to attain a low viscosity.

Photopolymerization initiator

The curable binder used in the present invention is cured by a photopolymerization initiator.

The photopolymerization initiator used in the present invention referred to here means a compound that generates active radical or cationic species by actinic radiation, and initiates and promotes a polymerization reaction of the binder. As the actinic radiation, radioactive radiation, γ-rays, α-rays, an electron beam, ultraviolet rays, etc. can be used. In particular, a method in which ultraviolet rays are used for curing is preferable.

Preferred examples of polymerization initiators that generate radicals by the action of light include acetophenone compounds, benzoin compounds, benzophenone compounds, thioxanthone compounds, benzil compounds, and acylphosphine oxide compounds. Examples of the acetophenone compounds include 2,2-diethoxyacetophenone, 2-hydroxymethyl-1-phenylpropan-1-one, 4'-isopropyl-2-hydroxy-2-methylpropiophenone, 2-hydroxy-2-methylpropiophenone, *p*-dimethylaminoacetone, *p*-*tert*-butyldichloroacetophenone, *p*-*tert*-butyltrichloroacetophenone, *p*-azidobenzalacetophenone, and 1-hydroxycyclohexyl phenyl ketone. Examples of the benzoin compounds include benzoin, benzoin methyl ether, benzoin ethyl ether, benzoin n-propyl ether, benzoin isopropyl ether, benzoin *n*-butyl ether, benzoin isobutyl ether, and benzil dimethyl ketal. Examples of the benzophenone compounds include benzophenone, methyl *o*-benzoylbenzoate, Michler's ketone, 4,4'-bisdiethylaminobenzophenone, and 4,4'-dichlorobenzophenone. Examples of the thioxanthone compounds include thioxanthone, 2-methylthioxanthone, 2-ethylthioxanthone, 2-isopropylthioxanthone, 4-isopropylthioxanthone, 2-chlorothioxanthone, and 2,4-diethylthioxanthone. Examples of the benzil compounds include benzil and benzil-β-methoxyethyl acetal. Examples of the acylphosphine oxide compounds include bis(2,6-dimethoxybenzoyl)(2,4,4-trimethylpentyl)phosphine oxide and 2,4,6-trimethylbenzoyldiphenylphosphine oxide.

The above-mentioned sulfonium salt, iodonium salt, etc., which are usually used as photo cation generators, can be used as radical generators by irradiation with ultraviolet rays, and they can therefore be used on their own in the present invention. Moreover, in order to increase the sensitivity, in addition to the polymerization initiator, a sensitizer can be used. Examples of the sensitizer include *n*-butylamine, triethylamine, tri-*n*-butylphosphine, and a thioxanthone derivative.

With regard to photopolymerization initiators that generate an active cationic species by ultraviolet rays, an onium salt initiator, for example, an aromatic sulfonium salt such as a triaryl sulfonium salt, or an aromatic iodonium salt such as a diaryl iodonium salt is useful, and a nonionic initiator such as a nitrobenzyl ester of a sulfonic acid can also be used. Furthermore, known photopolymerization initiators described in 'Imeijingu You Yukizairyo' (Organic Materials for Imaging), Ed. by The Japanese Research Association for Organic Electronics Materials, Bun-shin Publishing (1997), etc. can be used.

As a photoreaction initiator, an aromatic sulfonium salt, etc. is preferable since it is relatively stable thermally.

When an aromatic sulfonium salt or an aromatic iodonium salt is used as an onium salt photoreaction initiator, examples of its counter anion include $BF_4^-$, $AsF_6^-$, $SbF_6^-$, $PF_6^-$, and $B(C_6F_5)_4^-$. As the initiator, the aromatic sulfonium $PF_6$ salt or $SbF_6$ salt can be used preferably since it has solubility and an appropriate polymerization activity. In order to improve the solubility, it is preferable to employ a chemical structure in which one or more alkyl or alkoxy groups having 1 to 10 carbons have been introduced into the aromatic group, normally a phenyl group, of the aromatic iodonium salt or aromatic sulfonium salt.

The aromatic sulfonium $PF_6$ salts and $SbF_6$ salts are commercially available from Union Carbide Japan, etc. The aromatic sulfonium $PF_6$ salts are also commercially available from Asahi Denka Co., Ltd. under the product name Adeka Optomer SP series.

Since aromatic sulfonium salts have an absorption up to about 360 nm, and aromatic iodonium salts have an absorption up to about 320 nm, in order to cure them they are preferably irradiated with ultraviolet rays having spectral energy in this region.

Colorant

Colorants that can be used in the production process of the present invention can be broadly divided into dyes and pigments, and dyes can be used preferably.

With regard to the dyes, the use of subtractive primaries, that is, yellow (Y), magenta (M), and cyan (C), enables a wide range of hues to be reproduced at different saturations.

In the present invention, it is preferable to use dyes that are used for photographic color prints. Details are explained below.

Examples of the yellow dye include ketoimine type dyes obtained from couplers represented by Formulae (I) and (II) in US Pat. Nos. 3,933,501, 4,022,620, 4,326,024, 4,401,752, and 4,248,961, JP-B-58-10739, GB Pat. Nos. 1,425,020 and 1,476,760, US. Pat. Nos. 3,973,968, 4,314,023, and 4,511,649, and EP Pat. Nos. 249,473A and 502,424A; couplers represented by Formulae (1) and (2) in EP Pat. No. 513,496A (in particular, Y-28 on page 18); couplers represented by Formula (I) of Claim 1 in EP Pat. No. 568,037A; couplers represented by Formula (I) of lines 45 to 55 in Column 1 in US Pat. No. 5,066,576; couplers represented by Formula (I) in Paragraph 0008 in JP-A-4-274425; couplers of Claim 1 on page 40 in EP Pat. No. 498,381A1 (in particular, D-35 on page 18); couplers represented by Formula (Y) on page 4 in EP Pat. No. 447,969A1 (in particular, Y-1 (page 17) and Y-54 (page 41)); and couplers represented by Formulae (II) to (IV) on lines 36 to 58 of Column 7 in US Pat. No. 4,476,219 (in particular, II-17 and 19 (Column 17), and II-24 (Column 19)). Dyes described in JP-A-2001-294773, JP-A-2002-121414, JP-A-2002-105370, JP-A-2003-26974, and JP-A-2003-73598 are preferable; in particular, pyrazole compounds represented by Formula (Y-II) described in JP-A-2003-73598 are more preferably used, and Y-1 and Y-2 below can be cited as examples.

(Y-1)

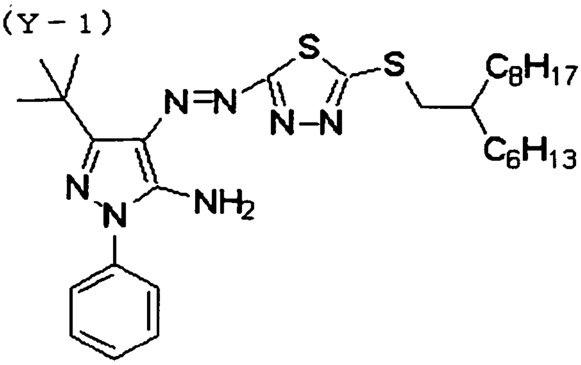

(Y-2)

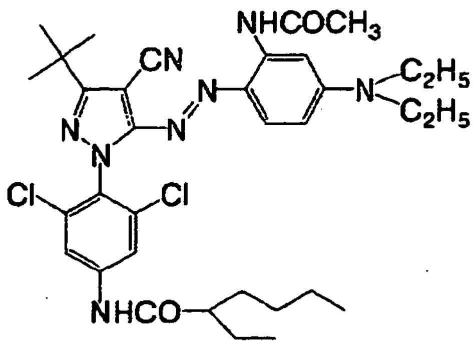

Examples of the magenta dye include dyes described in JP-A-2001-181549, JP-A-2002-121414, JP-A-2002-105370, JP-A-2003-12981, and JP-A-2003-26974.

Among them, pyrazolotriazole azomethine compounds represented by Formula (III) described in JP-A-2002-121414 are preferable, and M-1, M-2, and M-6 below can be cited as examples.

(M-1)

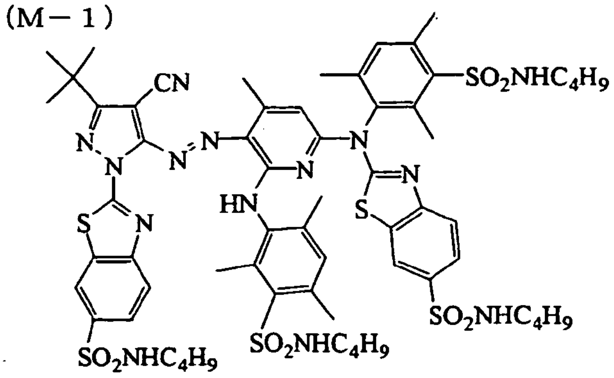

(M-2)

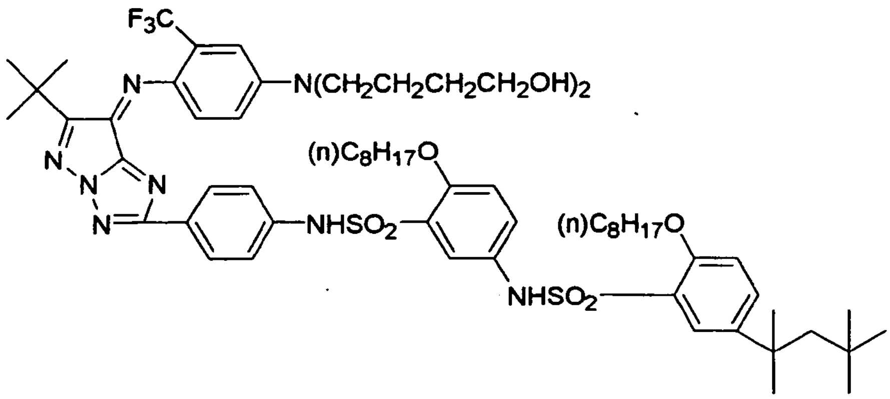

(M-6)

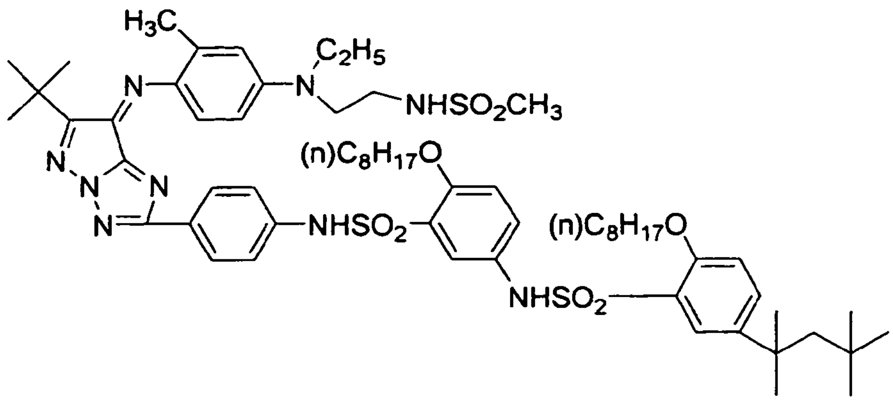

Examples of the cyan dye include dyes described in JP-A-2002-121414, JP-A-2002-105370, JP-A-2003-3109, and JP-A-2003-26974.

Pyrrolotriazole azomethine compounds represented by Formula(IV-1a) and phthalocyanine compounds represented by Formulae (C-II-1) and (C-II-2) described in JP-A-2002-121414 are preferably used, and C-1, C-2, C-101, and C-105 below can be cited as examples.

(C－1)

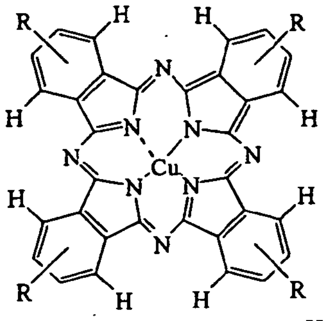

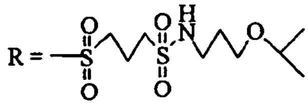

(C-2)

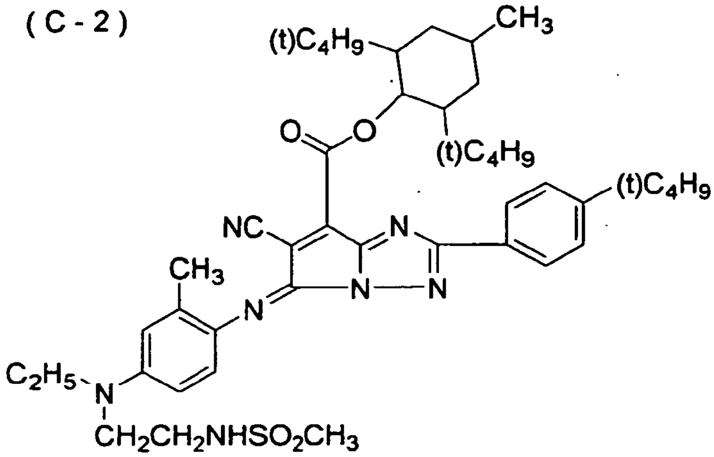

(C-101)

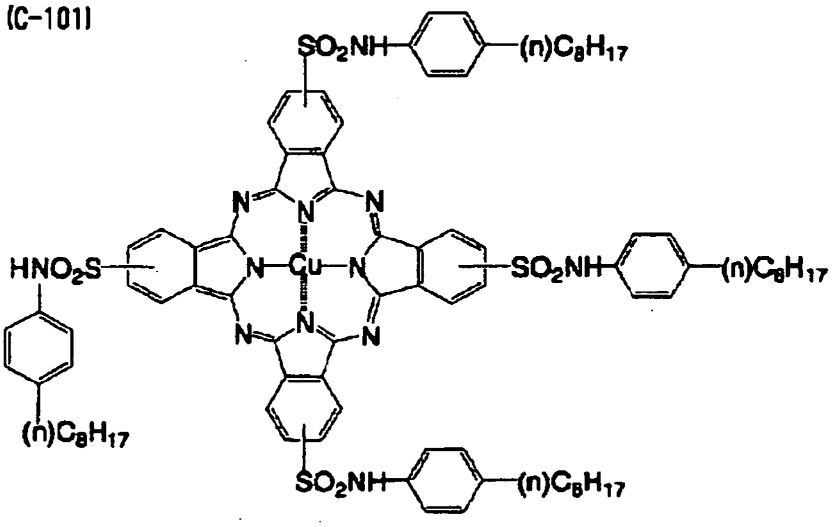

C-105

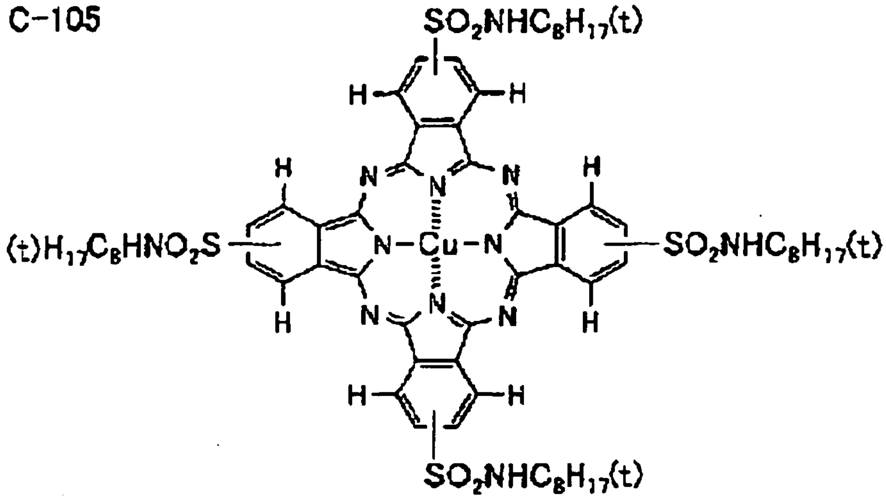

A black dye can be used as necessary in addition to the three CMY primaries. The black dye can be made by mixing the three CMY dyes.

With regard to dyes other than the above, those generally used in the field of printing technology (for example, printing inks, heat-sensitive inkjet recording, and color proofing plates or colorants for copying in electrophotographic recording etc.) can be used.

Examples thereof include dyes described in 'Senryo Binran' (Dye handbook) Ed. by The Society of Synthetic Organic Chemistry, Japan, Maruzen Co., Ltd. (1970), 'Kaisetsu Senryokagaku' (Explanation of Dye Chemistry), S. Abeta and K. Imada, Shikisensha Co., Ltd. (1988), 'Shikiso Handobukku' (Colorant Handbook), Ed. by S. Ogawara, Kodansha Ltd. (1986), 'Inkujetto Purinta You Kemikarusu' (Inkjet Printer Chemicals -Survey of Materials Development Trends and Prospects-), CMC Publishing Co., Ltd. (1997), 'Inkujetto Purinta' (Inkjet Printers- Technology and Materials), T. Amari, CMC Publishing Co., Ltd. (1998), etc.

Pigment

The pigment is not particularly limited, and it is possible to use any generally commercially available organic pigment or inorganic pigment, a dispersion of a pigment in an insoluble resin, etc. as a dispersion medium, a pigment on the surface of which a resin has been grafted, etc. It is also possible to use resin particles colored with a dye, etc.

In the present invention, in order to color the outer surface of a model, a color image is formed on the outline of a cross-sectional shape using the above-mentioned YMC binders, and a white reflection layer is preferably provided directly below this color image. The white reflection layer has a role corresponding to, for example, the background of a color print, and it is preferable to use a binder containing a white pigment (white binder) immediately inside the color image.

Specific examples of the white pigment that can be used include basic lead carbonate ($2PbCO_3Pb(OH)_2$, also known as silver white), zinc oxide (ZnO, also known as zinc white), titanium oxide ($TiO_2$, also known as titanium white), and strontium titanate ($SrTiO_3$, also known as titan strontium white).

Titanium oxide has, compared with other white pigments, a low specific gravity, a high refractive index, and is chemically and physically stable, and therefore has high hiding power and coloring power as a pigment and, furthermore, has excellent durability toward acids, alkalis, and other environments. It is therefore preferable to use titanium oxide as the white pigment. It is of course possible to use another white pigment (which can be any white pigment, in addition to the white pigments cited above) according to the type of powder material and binder component.

In the present invention, it is possible to use CMY pigments instead of the CMY dyes.

Specific examples of the organic pigment and the inorganic pigment include, as those exhibiting a yellow color, monoazo pigments such as CI Pigment Yellow 1 (Fast Yellow G, etc.) and CI Pigment Yellow 74, disazo pigments such as CI Pigment Yellow 12 (Disazo Yellow AAA, etc.) and CI Pigment Yellow 17, benzidine-free azo pigments such as CI Pigment Yellow 180, azo lake pigments such as CI Pigment Yellow 100 (Tartrazine Yellow Lake, etc.), condensed azo pigments such as CI Pigment Yellow 95 (Azo Condensation Yellow GR, etc.), acidic dye lake pigments such as CI Pigment Yellow 115 (Quinoline Yellow Lake, etc.), basic dye lake pigments such as CI Pigment Yellow 18 (Thioflavine Lake, etc.), anthraquinone pigments such as Flavanthrone Yellow (Y-24), isoindolinone pigments such as Isoindolinone

Yellow 3RLT (Y-110), quinophthalone pigments such as Quinophthalone Yellow (Y-138), isoindoline pigments such as Isoindoline Yellow (Y-139), nitroso pigments such as Cl Pigment Yellow 153 (Nickel Nitroso Yellow, etc.), and metal complex azomethine pigments such as Cl Pigment Yellow 117 (Copper Azomethine Yellow, etc.).

Examples of pigments exhibiting a magenta color include monoazo pigments such as Cl Pigment Red 3 (Toluidine Red, etc.), disazo pigments such as Cl Pigment Red 38 (Pyrazolone Red B, etc.), azo lake pigments such as Cl Pigment Red 53:1 (Lake Red C, etc.) and Cl Pigment Red 57:1 (Brilliant Carmine 6B), condensed azo pigments such as Cl Pigment Red 144 (Azo Condensation Red BR, etc.), acidic dye lake pigments such as Cl Pigment Red 174 (Phloxine B Lake, etc.), basic dye lake pigments such as Cl pigment red 81 (Rhodamine 6G' Lake, etc.), anthraquinone pigments such as Cl Pigment Red 177 (Dianthraquinonyl Red, etc.), thioindigo pigments such as Cl Pigment Red 88 (Thioindigo Bordeaux, etc.), perinone pigments such as Cl Pigment Red 194 (Perinone Red, etc.), perylene pigments such as Cl Pigment Red 149 (Perylene Scarlet, etc.), quinacridone pigments such as Cl Pigment Red 122 (Quinacridone Magenta, etc.), isoindolinone pigments such as Cl Pigment Red 180 (Isoindolinone Red 2BLT, etc.), and alizarin lake pigments such as Cl Pigment Red 83 (Madder Lake, etc.).

Examples of pigments exhibiting a cyan color include disazo pigments such as Cl Pigment Blue 25 (Dianisidine Blue, etc.), phthalocyanine pigments such as Cl Pigment Blue 15 (Phthalocyanine Blue, etc.), acidic dye lake pigments such as Cl Pigment Blue 24 (Peacock Blue Lake, etc.), basic dye lake pigments such as Cl Pigment Blue 1 (Victoria Pure Blue BO Lake, etc.), anthraquinone pigments such as Cl Pigment Blue 60 (Indanthrone Blue, etc.), and alkali blue pigments such as Cl Pigment Blue 18 (Alkali Blue V-5: 1).

In addition, processed pigments formed by dispersing fine pigment particles in a rosin ester resin, a vinyl chloride - vinyl acetate resin, etc. are commercially available, and they may be used. Specific examples of the commercially available processed pigments include Microlith pigments manufactured by Ciba Specialty Chemicals, and preferred examples of the processed pigment include Microlith-T pigments in which the pigment is coated with a rosin ester resin.

By repeatedly forming an anti-spreading shape, using an anti-spreading liquid along the outside of the outline of the cross-sectional shape formed by the UV-curing binder supplied to each of the organic powder material layers, at substantially the same time as the binder is supplied, it becomes possible to impart to the surface of a modeled object a realistic texture, that is, a feeling of gloss or smoothness.

UV exposure

With regard to UV exposure for curing the UV-curing binder, a highpressure mercury lamp, a low-pressure mercury lamp, a Deep UV lamp, a halogen lamp, etc., which are generally used, can be used, and the exposure wavelength is 450 to 250 nm, and preferably 400 to 300 nm. The exposure energy is preferably no greater than 500 $mJ/cm^2$, and more preferably 10 to 400 $mJ/cm^2$. UV light can be guided from the UV light source to the surface of the powder material using a UV-transparent optical fiber.

Examples

The present invention is explained below with reference to Examples, but the present invention should not be construed as being limited to these Examples.

Materials used in Examples of the present invention were as follows.

KAYARAD DPCA60 (caprolactone-modified dipentaerythritol hexaacrylate; manufactured by Nippon Kayaku Co., Ltd.)
HDDA (1,6-hexanediol diacrylate; manufactured by Daicel-UCB Co., Ltd.)
DPHA (dipentaerythritol hexaacrylate; an in-house product)
Tolyloxyethyl acrylate (tolyloxyethyl acrylate manufactured by Soken Chemical & Engineering Co., Ltd.)
Irgacure 1850 (1:1 mixture of 1-hydroxycyclohexyl phenyl ketone and bis(2,6-dimethoxybenzoyl)(2,4,4-trimethylpentyl)phosphine oxide; manufactured by Ciba Specialty Chemicals)
2-Hydroxy-2-methylpropiophenone (manufactured by Ciba Specialty Chemicals (Ciba S.C.))
1-Hydroxy-cyclohexyl phenyl ketone (manufactured by Ciba S.C.)
Titanium oxide (KRONOS KA-15, particle size 0.4 μm; manufactured by Titan Kogyo Kabushiki Kaisha)
Polymethyl methacrylate (MBX-12, average particle size 12 μm; manufactured by Sekisui Plastics Co., Ltd.)
Phenolic resin (Bellpearl R800, average particle size 20 μm; manufactured by Kanebo Ltd.)
Polystyrene (SBX-12, average particle size 12 μm; manufactured by Sekisui Plastics Co., Ltd.)
Polydivinylbenzene (Micropearl SP-203, average particle size 3 μm; manufactured by Sekisui Chemical Co., Ltd.)
Polytetrafluoroethylene (Lubron L-5, average particle size 7 μm; manufactured by Daikin Industries Ltd.)
Polyethylene (Flowbeads LE-1080, average particle size 6 μm; manufactured by Sumitomo Seika Chemicals Co., Ltd.)

Corn starch (average particle size 15 μm; manufactured by Nihon Shokuhin Kako Co., Ltd.)
Wheat starch (average particle size 10 μm; manufactured by Shin-shin Foods Co., Ltd.)
ZP14 (manufactured by Z Corp.)
ZB-4 (manufactured by Z Corp.)

Example 1

Preparation of UV-curing binder 'colorless, binder 1'

| | |
|---|---|
| Polymerizable compound: KAYARAD DPCA60 | 5.2 g |
| Polymerizable compound: HDDA | 14.8 g |
| (HDDA manufactured by Daicel UCB Co., Ltd.) Photopolymerization initiator: Irgacure 1850 | 0.6 g |

The above components were stirred and mixed to give colorless transparent binder 1 having a viscosity at 25°C of about 20 mPa·s.

Preparation of UV-curing binder 'white binder 1'

| | |
|---|---|
| Polymerizable compound: KAYARAD DPCA60 | 5.2 g |
| Polymerizable compound: HDDA | 14.8 g |
| Photopolymerization initiator: Irgacure 1850 | 0.6 g |
| White pigment: titanium oxide | 3 g |

The above components were kneaded using a three roll mill to give white binder 1 having a viscosity at 25°C of about 25 mPa·s.

Preparation of UV-curing binder 'yellow binder 1'

| | |
|---|---|
| Polymerizable compound: KAYARAD DPCA60 | 5.2 g |
| Polymerizable compound: HDDA | 14.8 g |
| Photopolymerization initiator: Irgacure 1850 | 0.6 g |
| Colorant: Y-1 | 0.8 g |

Y-1 above, and M-1 and C-1 below were as described in the 'Best Mode for Carrying Out the Invention' section.
The above components were stirred and mixed to give yellow binder 1 having a viscosity at 25°C of about 20 mPa·s.

Preparation of UV-curing binder 'magenta binder 1'

| | |
|---|---|
| Polymerizable compound: KAYARAD DPCA60 | 5.2 g |
| Polymerizable compound: HDDA | 14.8 g |
| Photopolymerization initiator: Irgacure 1850 | 0.6 g |
| Colorant: M-1 | 0.8 g |

The above components were stirred and mixed to give magenta binder 1 having a viscosity at 25°C of about 20 mPa·s.

Preparation of UV-curing binder cyan binder 1'

| | |
|---|---|
| Polymerizable compound: KAYARAD DPCA60 | 5.2 g |
| Polymerizable compound: HDDA | 14.8 g |
| Photopolymerization initiator: Irgacure 1850 | 0.6 g |
| Colorant: C-1 | 0.8 g |

The above components were stirred and mixed to give cyan binder 1 having a viscosity at 25°C of about 20 mPa·s.

Preparation of UV-curing binder 'black binder 1'

| | | |
|---|---|---|
| Polymerizable compound: KAYARAD DPCA60 | | 5.2 g |
| Polymerizable compound: HDDA | | 14.8 g |
| Photopolymerization initiator: Irgacure 1850 | | 0.6 g |
| Colorant: | Y-1 | 0.3 g |
| | M-1 | 0.3 g |
| | C-1 | 0.3 g |

The above components were stirred and mixed to give black binder 1 having a viscosity at 25°C of about 20 mPa·s

Formation of three-dimensional model

As a powder material, polymethyl methacrylate (MBX-12, average particle size 12 μm; manufactured by Sekisui Plastics Co., Ltd.) was laid using a rod to give one powder material layer having a thickness of about 80 μm, and the colored binders were then appropriately discharged via corresponding inkjet discharge nozzles according to data. The binder was discharged by adjusting the amount discharged so that powder material : binder = 60:40 (ratio by weight).

Liquid droplets were discharged by an inkjet system employing these UV-curing binders as inks at a resolution of 600 dpi (dot gap about 42 μm) so as to make dots form a continuous line. An exposure energy of 20 mJ/cm$^2$ was given to the powder material surface using a Deep UV lamp.

Subsequently, a powder material layer having a thickness corresponding to 1 slice pitch was further formed, the binders were supplied so as to match the required cross-sectional shape, and by repeating this a three-dimensional model was formed.

Example 2

A three-dimensional model was formed in the same manner as in Example 1 and evaluated except that as the powder material a phenolic resin was used instead of polymethyl methacrylate.

Example 3

A three-dimensional model was formed in the same manner as in Example 1 and evaluated except that as the powder material polystyrene was used instead of polymethyl methacrylate.

Example 4

A three-dimensional model was formed in the same manner as in Example 1 and evaluated except that as the powder material polydivinylbenzene was used instead of polymethyl methacrylate.

Example 5

A three-dimensional model was formed in the same manner as in Example 1 and evaluated except that as the powder material polytetrafluoroethylene was used instead of polymethyl methacrylate.

Example 6

A three-dimensional model was formed in the same manner as in Example 1 and evaluated except that as the powder material polyethylene was used instead of polymethyl methacrylate.

Comparative Example 1

A three-dimensional model was formed in the same manner as in Example 1 and evaluated except that as the powder material corn starch was used instead of polymethyl methacrylate.

Comparative Example 2

A three-dimensional model was formed in the same manner as in Example 1 and evaluated except that as the powder material wheat starch was used instead of polymethyl methacrylate.

Comparative Example 3

A three-dimensional model was formed in the same manner as in Example 1 and evaluated except that a Z402 printer (manufactured by Z Corp.) was used, as the powder material ZP14 (starch) was used, and as the binder ZB-4 was used.

Evaluation methods

A cylindrical model having a diameter of 5 cm and a thickness of 1 cm formed by the above-mentioned method was evaluated.
(1) Gloss measurement: surface gloss was measured using a UGV-6P digital variable-angle glossmeter (manufactured by Suga Test Instruments) at an angle of incidence of 20 degrees.
(2) Coloring properties: color vividness was evaluated visually and ranked as follows.

A Good
B Fair
C Poor

(3) Mechanical strength: the presence of cracks in the three-dimensional model obtained was evaluated visually.

A No cracks
C Cracked

The results above are summarized in Table 1.

(Table 1)

| No. | Powder | Binder | Gloss | Coloration | Mechanical strength |
|---|---|---|---|---|---|
| Ex. 1 | Polymethyl methacrylate | Acrylate | 55% | A | A |
| Ex. 2 | Phenolic resin | Acrylate | 42% | A | A |
| Ex. 3 | Polystyrene | Acrylate | 45% | A | A |
| Ex. 4 | Polydivinylbenzene | Acrylate | 48% | A | A |
| Ex. 5 | Polytetrafluoroethylene | Acrylate | 38% | A | A |
| Ex. 6 | Polyethylene | Acrylate | 41% | A | A |
| Comp. Ex. 1 | Corn starch | Acrylate | 12% | C | C |
| Comp. Ex. 2 | Wheat starch | Acrylate | 19% | C | C |
| Comp. Ex. 3 | ZP14 (starch) | ZB-4 | 0% | C | A |

Example 7

Preparation of UV curing binder 'colorless transparent binder 2'

| | |
|---|---|
| Polymerizable compound: DPHA | 10 g |
| Photopolymerization initiator: 2-hydroxy-2-methylpropiophenone | 0.6 g |
| Viscosity-adjusting polymerizable compound: tolyloxyethyl acrylate | 10 g |

The above components were stirred and mixed to give colorless transparent binder 2.

Preparation of UV curing binder 'white binder 2'

| | |
|---|---|
| Polymerizable compound: DPHA | 10 g |
| Photopolymerization initiator: 2-hydroxy-2-methylpropiophenone | 0.6 g |
| Viscosity-adjusting polymerizable compound: tolyloxyethyl acrylate | 10 g |
| White pigment: titanium oxide | 3 g |

The above components were kneaded using a three roll mill to give white binder 2.

Preparation of UV curing binder 'yellow binder 2'

| | |
|---|---|
| Polymerizable compound: DPHA | 10 g |
| Photopolymerization initiator: 1-hydroxycyclohexyl phenyl ketone | 0.5 g |
| Viscosity-adjusting monomer: tolyloxyethyl acrylate | 10 g |
| Colorant: Y-2 | 0.8 g |

Y-2 above, and M-2 and C-2 below were as described in the 'Best Mode for Carrying Out the Invention' section.
The above components were stirred and mixed to give yellow binder 2.

Preparation of UV curing binder 'magenta binder 2'

| | |
|---|---|
| Polymerizable compound: DPHA | 10 g |
| Photopolymerization initiator: 1-hydroxycyclohexyl phenyl ketone | 0.5 g |
| Viscosity-adjusting polymerizable compound: tolyloxyethyl acrylate | 10 g |
| Colorant: M-2 | 0.8 g |

The above components were stirred and mixed to give magenta binder 2.

Preparation of UV curing binder 'cyan binder 2'

| | |
|---|---|
| Polymerizable compound: DPHA | 10 g |
| Photopolymerization initiator: 1-hydroxycyclohexyl phenyl ketone | 0.5 g |
| Viscosity-adjusting polymerizable compound: tolyloxyethyl acrylate | 10 g |
| Colorant: C-2 | 0.8 g |

The above components were stirred and mixed to give cyan binder 2.

Preparation of UV curing binder 'black binder 2'

| | | |
|---|---|---|
| Polymerizable compound: DPHA | | 10 g |
| Photopolymerization initiator: 1-hydroxycyclohexyl phenyl ketone | | 0.5 g |
| Viscosity-adjusting polymerizable compound: tolyloxyethyl acrylate | | 10 g |
| Colorant: | Y-2 | 0.3 g |
| | M-2 | 0.2 g |
| | C-2 | 0.4 g |

The above components were stirred and mixed to give black binder 2.

Formation of three-dimensional model

As the organic powder material, polymethyl methacrylate particles (MBX-8, average particle size 8 μm, porosity 0.400; manufactured by Sekisui Plastics Co., Ltd.) was laid using a rod to give one powder material layer having a thickness of about 100 μm, and yellow binder 2, magenta binder 2, cyan binder 2, black binder 2, white binder 2, and colorless transparent binder 2 were then appropriately discharged via corresponding inkjet discharge nozzles according to color data.
Liquid droplets were discharged by an inkjet system employing these UV-curing binders as inks at a resolution of 600 dpi (dot gap about 42 μm) so as to make dots form a continuous line, while adjusting the amount of ink as necessary for a portion where strength was required. Subsequently, a powder material layer having a thickness corresponding to 1 slice pitch was further formed, the binders were supplied so as to match the required cross-sectional shape, and by repeating this a three-dimensional model was formed.
The ratio of the polymethyl methacrylate to the total amount of UV curing binders was adjusted so that polymethyl methacrylate particles : binder = 50:50 (ratio by volume).

Example 8

Evaluation was carried out in the same manner as in Example 7 except that polymethyl methacrylate particles (MBX-30, average particle size 30 μm, porosity 0.354; manufactured by Sekisui Plastics Co., Ltd.) were used as the powder material.

Example 9

Evaluation was carried out in the same manner as in Example 7 except that polystyrene particles (SBX-6, average particle size 6 μm, porosity 0.428; manufactured by Sekisui Plastics Co., Ltd.) were used as the powder material.

Example 10

Evaluation was carried out in the same manner as in Example 7 except that polyethylene particles (Flowbeads LE-1080, average particle size 6 μm, porosity 0.605; manufactured by Sumitomo Seika Chemicals Co., Ltd.) were used as the powder material.

Example 11

Evaluation was carried out in the same manner as in Example 7 except that melamine formaldehyde resin particles (Epostar S12, average particle size 1.5 μm, porosity 0.658; manufactured by Nippon Shokubai Co., Ltd.) were used as the powder material.

Comparative Example 4

Formation was carried out by the same production method as in Example 7 except that silica particles (Mizukasil P-707, average particle size 2.2 μm, porosity 0.926; manufactured by Mizusawa Industrial Chemicals, Ltd.) were used

as the powder material, and evaluation was carried out.

The bulk volume of the powder material was measured in accordance with JIS K6223 (Calcium Carbonate for Rubber) '6.4 Apparent Specific Gravity', and the ratio thereof relative to the true specific gravity was calculated to determine the porosity.

The average particle size of the powder material was measured using a COULTER MULTISIZER manufactured by Beckman Coulter, Inc. with a pore size of 100 μm.

Evaluation methods

Texture

A sensory evaluation of the smoothness of the surface of a three-dimensional model so obtained was carried out visually and by touching by hand, and was used as a reference for the texture; the ranking was as follows.

A Good
B Fair
C Poor

Mechanical strength

The presence of cracks in a three-dimensional model so obtained was visually evaluated.

A No cracks
C Cracked

The results for the above are summarized in Table 2 below.

(Table 2)

| No. | Powder material | | Porosity | strength | Texture |
|---|---|---|---|---|---|
| Ex. 7 | PMMA | 8 μm | 0.400 | A | A |
| Ex.8 | PMMA μm | 30 | 0.354 | A | A |
| Ex. 9 | PSt | 6 μm | 0.428 | A | A |
| Ex. 10 | Polyethylene | 6 μm | 0.605 | A | A |
| Ex. 11 | Melamine formaldehyde μm | 1.5 | 0.658 | A | A |
| Comp. Ex. 4 | Silica μm | 2.2 | 0.926 | C | C |

Example 12

Preparation of UV curing binder 'colorless transparent binder 3'

| | |
|---|---|
| Polymerizable compound: DPHA | 10 g |
| Photopolymerization initiator: 2-hydroxy-2-methylpropiophenone | 0.6 g |
| Viscosity-adjusting polymerizable compound: tolyloxyethyl acrylate | 20 g |

The above components were stirred and mixed to give colorless transparent binder 3.

Preparation of UV curing binder 'white binder 3'

| | |
|---|---|
| Polymerizable compound: DPHA | 10 g |
| Photopolymerization initiator: 2-hydroxy-2-methylpropiophenone | 0.6 g |
| Viscosity-adjusting polymerizable compound: tolyloxyethyl acrylate | 20 g |
| White pigment: titanium oxide | 3 g |

The above components were kneaded using a three roll mill to give white binder 3.

Preparation of UV curing binder 'yellow binder 3'

| | |
|---|---|
| Polymerizable compound: DPHA | 10 g |
| Photopolymerization initiator: 1-hydroxycyclohexyl phenyl ketone | 0.5 g |
| Viscosity-adjusting polymerizable compound: tolyloxyethyl acrylate | 20 g |
| Colorant: Y-2 | 0.8 g |

Y-2 above, and M-6 and C-105 below were as described in the 'Best Mode for Carrying Out the Invention' section.

The above components were stirred and mixed to give yellow binder 3.

Preparation of UV curing binder 'magenta binder 3'

| | |
|---|---|
| Polymerizable compound: DPHA | 10 g |
| Photopolymerization initiator: 1-hydroxycyclohexyl phenyl ketone | 0.5 g |
| Viscosity-adjusting polymerizable compound: tolyloxyethyl acrylate | 20 g |
| Colorant: M-6 | 0.8 g |

The above components were stirred and mixed to give magenta binder 3.

Preparation of UV curing binder 'cyan binder 3'

| | |
|---|---|
| Polymerizable compound: DPHA | 10 g |
| Photopolymerization initiator: 1-hydroxycyclohexyl phenyl ketone | 0.5 g |
| Viscosity-adjusting polymerizable compound: tolyloxyethyl acrylate | 20 g |
| Colorant: C-105 | 0.8 g |

The above components were stirred and mixed to give cyan binder 3.

Preparation of UV curing binder 'black binder 3'

| | | |
|---|---|---|
| Polymerizable compound: DPHA | | 10 g |
| Photopolymerization initiator: 1-hydroxycyclohexyl phenyl ketone | | 0.5 g |
| Viscosity-adjusting polymerizable compound: tolyloxyethyl acrylate | | 20 g |
| Colorant: | Y-2 | 0.3 g |
| | M-6 | 0.2 g |
| | C-105 | 0.4 g |

The above components were stirred and mixed to give black binder 3.

Formation of three-dimensional model

As the organic powder material, a mixture of (a) polymethyl methacrylate particles (MR-30G, average particle size 30 μm; manufactured by Soken Chemical & Engineering Co., Ltd.) and (b) polymethyl methacrylate particles (MR-2G, average particle size 1.0 μm; manufactured by Soken Chemical & Engineering Co., Ltd.) at (a) / (b) = 74/26 (ratio by volume) was laid using a rod to give one powder material layer having a thickness of about 80 μm, and yellow binder 3, magenta binder 3, cyan binder 3, black binder 3, white binder 3, and colorless transparent binder 3 were then appropriately discharged via corresponding inkjet discharge nozzles according to color data.

Liquid droplets were discharged by an inkjet system employing these UV-curing binders as inks at a resolution of 600 dpi (dot gap about 42 μm) so as to make dots form a continuous line, while adjusting the amount of ink as necessary for a portion where strength was required. Subsequently, a powder material layer having a thickness corresponding to 1 slice pitch was further formed, the binders were supplied so as to match the required cross-sectional shape, and by repeating this a three-dimensional model was formed.

The ratio of the powder material mixture of the polymethyl methacrylate particles (a) and the polymethyl methacrylate (b) to the total amount of the UV curing binders was adjusted so that powder material mixture : UV curing binders = 50:50 (ratio by volume).

Example 13

Evaluation was carried out in the same manner as in Example 12 using a mixed powder of (a) polymethyl methacrylate particles (MX-1500H, average particle size 15 μm; manufactured by Soken Chemical & Engineering Co., Ltd.) and (b) polymethyl methacrylate particles (MX-150, average particle size 1.5 μm; manufactured by Soken Chemical & Engineering Co., Ltd.) at (a) / (b) = 70/30 (ratio by volume).

Example 14

Evaluation was carried out in the same manner as in Example 12 using a mixed powder of (a) polystyrene particles (SBX-17, average particle size 17 μm; manufactured by Sekisui Plastics Co., Ltd.) and (b) polystyrene particles (BX-6, average particle size 6 μm; manufactured by Sekisui Plastics Co., Ltd.) at (a) / (b) = 80/20 (ratio by volume).

Comparative Example 5

Formation was carried out by the same production method as in Example 12 except that as the powder material aluminum hydroxide particles (Hygilite H-31, average particle size 17 μm; manufactured by Showa Light Metal Co., Ltd.) was used on its own, and evaluation was carried out.

Measurement method

Average particle size

The average particle size of the powder material was measured using a COULTER MULTISIZER manufactured by Beckman Coulter, Inc. with a pore size of 100 μm.

Evaluation methods

Texture

A sensory evaluation of the smoothness of the surface of a three-dimensional model so obtained was carried out visually and by touching by hand, and was used as a reference for the texture; the ranking was as follows.

| | |
|---|---|
| A | Good |
| B | Fair |
| C | Poor |

Mechanical strength

The presence of cracks in a three-dimensional model so obtained was visually evaluated.

A No cracks
C Cracked

The results for the above are summarized in Table 3 below.

(Table 3)

| No. | Powder material | | Mechanical strength | Texture |
|---|---|---|---|---|
| Ex. 12 | PMMA | 30 μm: 74 parts | A | A |
| | PMMA | 1 μm: 26 parts | | |
| Ex. 13 | PMMA | 15 μm: 70 parts | A | A |
| | PMMA | 1.5 μm: 30 parts | | |
| Ex. 14 | Pst | 17 μm: 80 parts | A | A |
| | Pst | 6 μm: 20 parts | | |
| Comp. Ex. 5 | Aluminum hydroxide 17 μm | | C | C |

**Claims**

1. A process for producing a three-dimensional model, the process comprising:

   a step of forming above a support a layer comprising a powder material; and
   a step of imagewise bonding the powder material layer by a binder; wherein the powder material comprises two or more types of powder materials having different average particle sizes, **characterized in that**

   (a) the powder material employing a synthetic organic powder, and
   (b) the binder comprising at least (b-1) a tri- or higher functional (meth)acrylate, (b-2) a monofunctional and/or difunctional (meth)acrylate, and (b-3) a photopolymerization initiator and being cured by actinic radiation,

   the ratio (a-2)/(a-1) by volume of small particle size particles (a-2) to large particle size particles (a-1) being 5/95 to 50/50, and
   average particle size of (a-1) / average particle size of (a-2) being 2 to 500.

2. The process for producing a three-dimensional model according to Claim 1, wherein the process comprises sequentially repeating a step of forming above a support a layer of a powder material, the layer having a predetermined thickness; and a step of imagewise bonding the powder material layer by a binder according to sliced cross-sectional data of a modeled object so as to give a cross-sectional shape.

3. The process for producing a three-dimensional model according to either Claim 1 or 2, wherein the powder material is a synthetic macromolecular compound.

4. The process for producing a three-dimensional model according to any one of Claims 1 to 3, wherein the powder material is selected from the group consisting of an acrylic resin, an olefin resin, a phenolic resin, a styrene resin, a divinylbenzene resin, and a fluorine resin.

5. The process for producing a three-dimensional model according to any one of Claims 1 to 4, wherein the binder employs two or more types of binders selected from the group consisting of at least one type of colored binder, a white binder, and a colorless binder.

6. The process for producing a three-dimensional model according to Claim 5, wherein the colored binder comprises at least two binders selected from the group consisting of a yellow binder, a magenta binder, a cyan binder, and a black binder.

7. The process for producing a three-dimensional model according to any one of Claims 1 to 6, wherein the binder comprises a UV-curing compound.

8. The process for producing a three-dimensional model according to any one of Claims 1 to 7, wherein the binder comprises at least one type of functional (meth) acrylate.

9. The process for producing a three-dimensional model according to Claim 1, wherein all of said two or more types of powder materials have an average particle size of 0.1 μm to 50 μm.

10. The process for producing a three-dimensional model according to any one of Claims 1 to 9, wherein the average particle size of the large particle size particles (a-1) is in the range of 5 to 50 μm, and the average particle size of the small particle size particles (a-2) is in the range of 0.1 to 10 μm.

**Patentansprüche**

1. Verfahren zur Herstellung eines dreidimensionalen Modells, wobei das Verfahren umfasst:

   einen Schritt zum Bilden, oberhalb eines Trägers, einer Schicht, die ein Pulvermaterial umfasst; und
   einen Schritt zum bildweisen Binden der Pulvermaterialschicht durch ein Bindemittel; worin das Pulvermaterial zwei oder mehr Arten von Pulvermaterialien umfasst, die verschiedene mittlere Partikelgrößen aufweisen, **dadurch gekennzeichnet, dass**

      (a) bei dem Pulvermaterial ein synthetisches organisches Pulver eingesetzt wird und
      (b) das Bindemittel mindestens (b-1) ein tri- oder höher-funktionelles (Meth)acrylat, (b-2) ein monofunktionelles und/oder difunktionelles (Meth)acrylat und (b-3) einen Fotopolymerisationsinitiator umfasst und durch aktinische Strahlung gehärtet wird,

   wobei das Volumenverhältnis (a-2)/(a-1) von kleinteiligen Partikeln (a-2) zu großteiligen Partikeln (a-1) 5/95 bis 50/50 beträgt und
   das Verhältnis mittlere Partikelgröße von (a-1)/mittlere Partikelgröße von (a-2) 2 bis 500 beträgt.

2. Verfahren zur Herstellung eines dreidimensionalen Modells gemäß Anspruch 1, wobei das Verfahren das sequentielle Wiederholen eines Schritts zum Bilden, oberhalb eines Trägers, einer Schicht aus einem Pulvermaterial, wobei die Schicht eine vorbestimmte Dicke aufweist; und einen Schritt zum bildweisen Binden der Pulvermaterialschicht durch ein Bindemittel gemäß aufgeschnittenen Querschnittsdaten eines modellierten Objekts, um so eine Querschnittsform zu ergeben, umfasst.

3. Verfahren zur Herstellung eines dreidimensionalen Modells gemäß einem der Ansprüche 1 oder 2, worin das Pulvermaterial eine synthetische makromolekulare Verbindung ist.

4. Verfahren zur Herstellung eines dreidimensionalen Modells gemäß irgendeinem der Ansprüche 1 bis 3, worin das Pulvermaterial ausgewählt ist aus der Gruppe bestehend aus einem Acrylharz, einem Olefinharz, einem Phenolharz, einem Styrolharz, einem Divinylbenzolharz und einem Fluorharz.

5. Verfahren zur Herstellung eines dreidimensionalen Modells gemäß irgendeinem der Ansprüche 1 bis 4, wobei bei dem Bindemittel zwei oder mehr Arten von Bindemitteln eingesetzt werden, die ausgewählt sind aus der Gruppe bestehend aus mindestens einer Art von gefärbtem Bindemittel, einem weißen Bindemittel und einem farblosen Bindemittel.

6. Verfahren zur Herstellung eines dreidimensionalen Modells gemäß Anspruch 5, worin das gefärbte Bindemittel mindestens zwei Bindemittel umfasst, die ausgewählt sind aus der Gruppe bestehend aus einem gelben Bindemittel, einem Magenta-farbenen Bindemittel, einem Cyan-farbenen Bindemittel und einem schwarzen Bindemittel.

7. Verfahren zur Herstellung eines dreidimensionalen Modells gemäß irgendeinem der Ansprüche 1 bis 6, worin das Bindemittel eine UV-härtende Verbindung umfasst.

8. Verfahren zur Herstellung eines dreidimensionalen Modells gemäß irgendeinem der Ansprüche 1 bis 7, worin das

Bindemittel mindestens eine Art von funktionellem (Meth)acrylat umfasst.

9. Verfahren zur Herstellung eines dreidimensionalen Modells gemäß Anspruch 1, worin alle der zwei oder mehr Arten von Pulvermaterialien eine mittlere Partikelgröße von 0,1 μm bis 50 μm aufweisen.

10. Verfahren zur Herstellung eines dreidimensionalen Modells gemäß irgendeinem der Ansprüche 1 bis 9, worin die mittlere Partikelgröße der großteiligen Partikel (A-1) im Bereich von 5 bis 50 μm liegt und die mittlere Partikelgröße der kleinteiligen Partikel (a-2) im Bereich von 0,1 bis 10 μm liegt.

## Revendications

1. Processus pour produire un modèle tridimensionnel, le processus comprenant :

   une étape de formation au-dessus d'un support d'une couche comprenant une matière poudreuse ; et
   une étape de liaison image par image de la couche de matière poudreuse par un liant ;
   dans lequel la matière poudreuse comprend deux ou plusieurs types de matières poudreuses ayant des tailles de particule moyennes différentes, **caractérisé par**

      (a) la matière poudreuse employant une poudre organique synthétique, et
      (b) le liant comprenant au moins (b-1) un tri-(méth)acrylate fonctionnel ou supérieur, (b-2) un (méth)acrylate monofonctionnel et/ou difonctionnel, et (b-3) un initiateur de photopolymérisation et cuit par un rayonnement actinique,

   le rapport volumique (a-2) / (a-1) de particules de petite taille (a-2) sur des particules de grande taille (a-1) étant de 5/95 à 50/50, et
   une taille de particule moyenne de (a-1) / taille de particule moyenne de (a-2) étant de 2 à 500.

2. Processus pour produire un modèle tridimensionnel selon la revendication 1, dans lequel le processus comprend la répétition séquentielle d'une étape de formation au-dessus d'un support d'une couche d'une matière poudreuse, la couche ayant une épaisseur prédéterminée ; et une étape de liaison image par image de la couche de matière poudreuse par un liant selon des données transversales lamellaires d'un objet modelé de façon à donner une forme transversale.

3. Processus pour produire un modèle tridimensionnel selon l'une ou l'autre de la revendication 1 ou 2, dans lequel la matière poudreuse est un composé macromoléculaire synthétique.

4. Processus pour produire un modèle tridimensionnel selon l'une quelconque des revendications 1 à 3, dans lequel la matière poudreuse est sélectionnée à partir du groupe constitué par une résine acrylique, une résine d'oléfine, une résine phénolique, une résine de styrène, une résine de divinylbenzène et une résine de fluor.

5. Processus pour produire un modèle tridimensionnel selon l'une quelconque des revendications 1 à 4, dans lequel le liant emploie deux ou plusieurs types de liants sélectionnés à partir du groupe consistant en au moins un type de liant coloré, un liant blanc et un liant sans couleur.

6. Processus pour produire un modèle tridimensionnel selon la revendication 5, dans lequel le liant coloré comprend au moins deux liants sélectionnés à partir du groupe consistant en un liant jaune, un liant magenta, un liant cyan et un liant noir.

7. Processus pour produire un modèle tridimensionnel selon l'une quelconque des revendications 1 à 6, dans lequel le liant comprend un composé à cuisson aux UV.

8. Processus pour produire un modèle tridimensionnel selon l'une quelconque des revendications 1 à 7, dans lequel le liant comprend au moins un type de (méth)acrylate fonctionnel.

9. Processus pour produire un modèle tridimensionnel selon la revendication 1, dans lequel la totalité desdits deux ou plusieurs types de matières poudreuse a une taille de particule moyenne de 0,1 μm à 50 μm.

**10.** Processus pour produire un modèle tridimensionnel selon l'une quelconque des revendications 1 à 9, dans lequel la taille de particule moyenne des particules de grande taille (a-1) est dans la plage de 5 à 50 μm et la taille de particule moyenne des particules de petite taille (a-2) est dans la plage de 0,1 à 10 μm.

FIG. 1

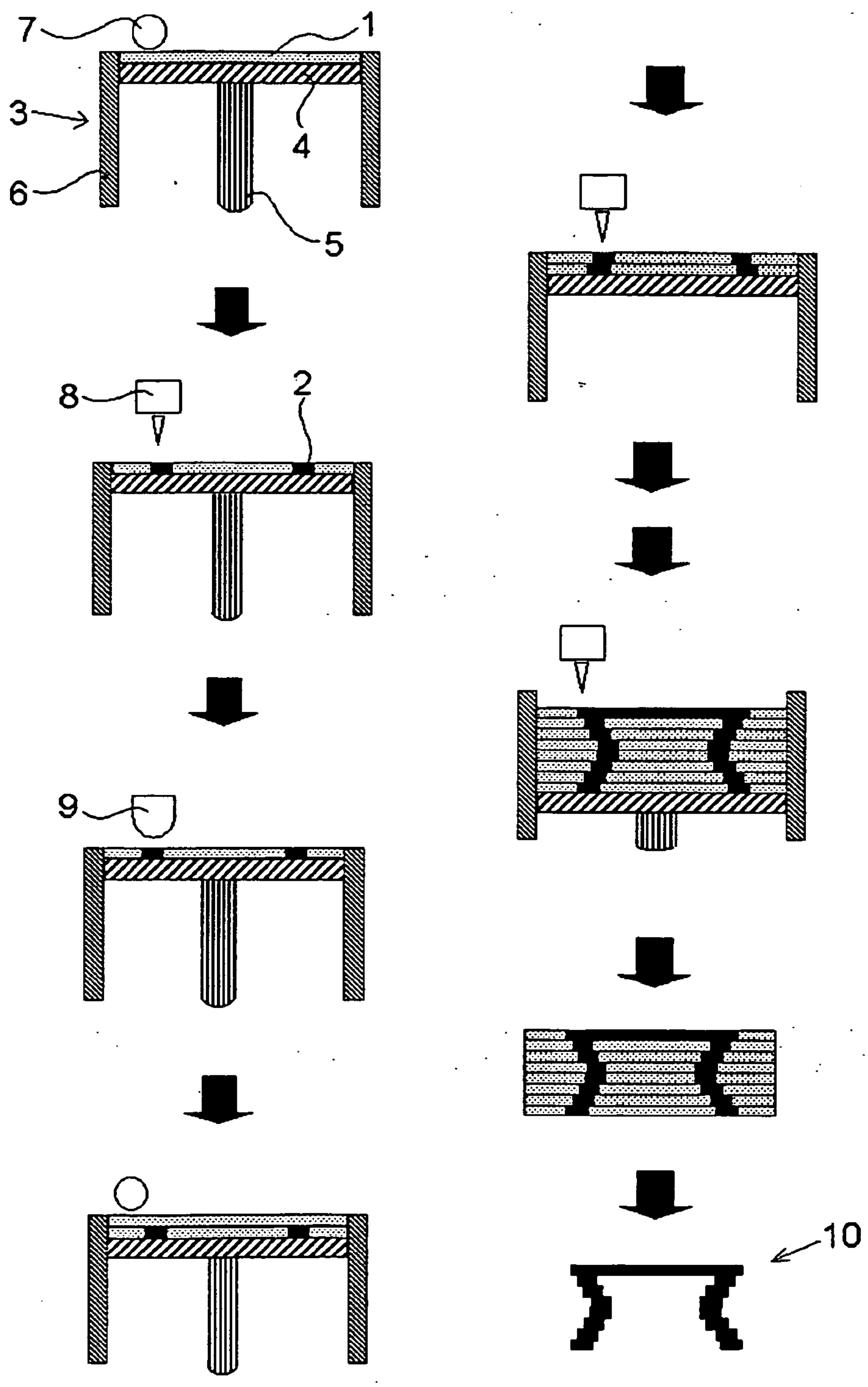

*FIG.2*

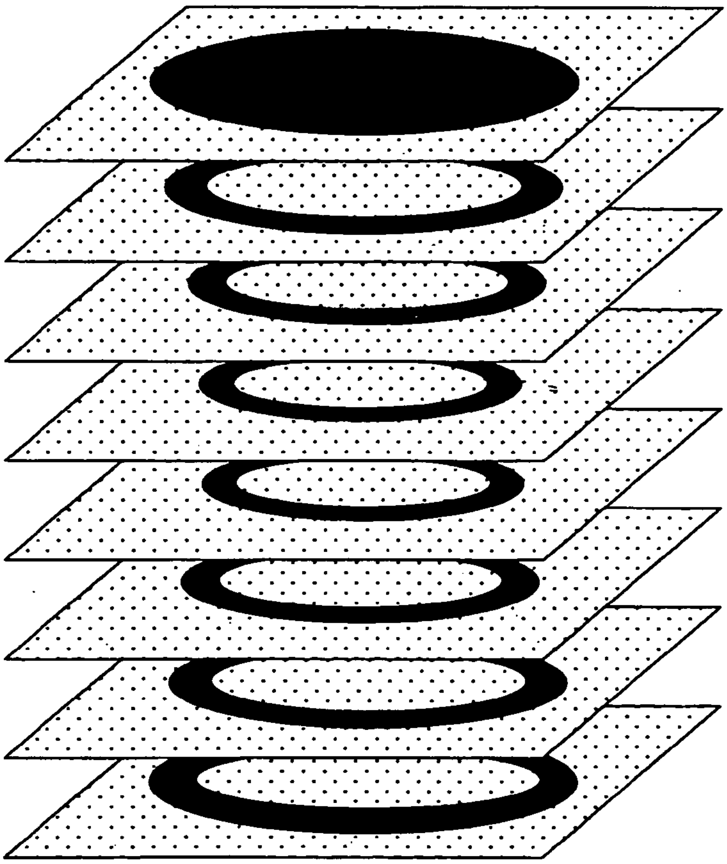

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2002105114 A
- JP 2729110 B
- JP 2001150556 A
- JP 2002307562 A
- JP 46027926 B
- JP 51047334 B
- JP 57196231 A
- JP 59005240 A
- JP 59005241 A
- JP 2226149 A
- JP 1165613 A
- JP 54021726 B
- JP 48041708 B
- JP 11140279 A
- JP 6016804 A
- US 3933501 A
- US 4022620 A
- US 4326024 A
- US 4401752 A
- US 4248961 A
- JP 58010739 B
- GB 1425020 A
- GB 1476760 A
- US 3973968 A
- US 4314023 A
- US 4511649 A
- EP 249473 A
- EP 502424 A
- EP 513496 A
- EP 568037 A
- US 5066576 A
- JP 4274425 A
- EP 498381 A1
- EP 447969 A1
- US 4476219 A
- JP 2001294773 A
- JP 2002121414 A
- JP 2002105370 A
- JP 2003026974 A
- JP 2003073598 A
- JP 2001181549 A
- JP 2003012981 A
- JP 2003003109 A


### Non-patent literature cited in the description


- **T. Mita.** Kobunshi Daijiten' (Polymer Dictionary). Maruzen Co., Ltd, 1994, 6-12
- **T. Mita.** Kobunshi Daijiten. Maruzen Co., Ltd, 1994, 102-109
- Jikken Kagaku Koza. Polymer Synthesis. 1992, vol. 28, 427-430
- Kobunshi Daijiten. T. Mita, Maruzen Co., Ltd, 1994, 506-507
- Poriuretan Handobukku. The Nikkan Kogyo Shimbun Ltd, 1987, 77-81
- Imeijingu You Yukizairyo. Bun-shin Publishing, 1997
- Senryo Binran. The Society of Synthetic Organic Chemistry. Maruzen Co., Ltd, 1970
- **S. Abeta ; K. Imada.** Kaisetsu Senryokagaku. Shikisensha Co., Ltd, 1988
- Shikiso Handobukku. Kodansha Ltd, 1986
- Inkujetto Purinta You Kemikarusu. CMC Publishing Co., Ltd, 1997
- **T. Amari.** Inkujetto Purinta. CMC Publishing Co., Ltd, 1998